# EUROPEAN PATENT SPECIFICATION

(11) **EP 2 158 263 B1**
(45) Date of publication and mention of the grant of the patent: **04.03.2015**
(21) Application number: 08756475.3
(22) Date of filing: 29.05.2008
(51) Int. Cl.: B29C 71/04, B29L 23/00, B29K 23/00, C08L 23/06, C08L 23/18, C08L 51/06, F16L 11/06, H01B 3/44, B29K 105/24

(54) **CROSSLINKED POLYETHYLENE ARTICLES AND PROCESSES TO PRODUCE SAME**
GEGENSTÄNDE AUS VERNETZTEM POLYETHYLEN UND HERSTELLUNGSVERFAHREN DAFÜR
ARTICLES DE POLYÉTHYLÈNE RÉTICULÉ ET LEURS PROCÉDÉS DE FABRICATION

(30) Priority: 21.06.2007 US 936577 P; 15.01.2008 US 21277 P
(43) Date of publication of application: 03.03.2010
(73) Proprietor: ExxonMobil Chemical Patents Inc., Baytown, TX 77520 (US); Zurn Pex, Inc., Commerce, TX 75428 (US)
(72) Inventor: RUSSELL, Robert, G., Sulphur Springs, TX 75482 (US); MIZE, Rodney, Cooper, TX 75423 (US); RUNYAN, Gary, Lee, Plano, TX 75025 (US); HARRINGTON, Bruce, A., Houston, TX 77062 (US); CHAPMAN, Bryan, R., Annandale, NJ 08801 (US); DUNAWAY, David, B., Houston, TX 77077 (US); ALLERMANN, Gerd, Arthur, B-3090 Overijse (BE)
(74) Representative: UEXKÜLL & STOLBERG
(86) International application number: PCT/US2008/065177
(87) International publication number: WO 2009/002653

(56) References cited:
- EP-A- 0 960 924
- WO-A-02/18487
- US-A1- 2004 106 723
- US-A1- 2006 173 123

## Description

### PRIORITY CLAIM AND CROSS REFERENCE TO RELATED APPLICATION

This application claims the benefit of and priority to application US 60/936,577 filed June 21, 2007, and US 61/021,277, filed January 15, 2008.

### BACKGROUND OF THE INVENTION

This application relates, in general, to a plastic material often used in high pressure applications having improved flexibility and a method of manufacturing such material, and more particularly to the addition of a polymer modifier to a base polymer for increasing the flexibility of a plastic material which does not deleteriously affect the base polymer structure and/or strength of the plastic material.

A typical technique for increasing the flexibility of plastic parts is through the addition to the base resin of a relatively lower density polymer or a more amorphous polymer, such as a plastomer, to form the plastic part. Currently used plastomers, while effectively increasing the flexibility of the product, have the disadvantage of decreasing the strength of the plastic as it can deleteriously affect the base polymer structure of the plastic material. In particular, the plastomer typically decreases the strength of the plastic material due to the more amorphous structure.

Crosslinked polyethylene, sometimes referred to as PEX or XL-PE, is a well known plastic material having many common uses. PEX is commonly used in the production of tubing, conduits, and piping for use in a variety of applications such as fire protection, plumbing, heating, gas distribution, and the like. Due to the flexibility and strength of PEX at temperatures ranging from below freezing up to 93°C (200°F), PEX is an ideal piping material for hot and cold water plumbing systems, hydronic radiant heating systems, snow melting applications, ice rinks and refrigeration warehouses.

A common use of PEX is in the production of barrier pipes. Barrier pipes are plastic water pipes that are used in domestic heating systems. The pipe is manufactured with a barrier that prevents oxygen from penetrating the material and entering the water system, reducing the risk of corrosion. The oxygen barrier layer is usually a resin material bonded between the outer and inner layer of the pipe itself.

Another common use of crosslinked polyethylene is in wire and cable applications including coatings such as, for example, insulation or jacketing.

In the production of PEX, crosslinks between polyethylene macromolecules are formed to make the resulting molecule more durable under temperature extremes and chemical attack, and more resistant to creep deformation. It is noted that in highly filled blends, such as for wire and cable applications, for example, that the PE is not necessarily considered to strictly crosslink. Therefore, for the purpose of this invention, filled systems that couple, bond or graft, will be considered crosslinked for purposes of the description herein and included within the definition of crosslinked polyethylene.

When attempting to increase the flexibility of PEX pipes for certain uses, such as barrier pipes, to reach a particular flexibility goal, the load levels of previously used plastomers had to be high, usually in excess of 20 percent by weight of the total material composition. These high loadings of plastomer diluted the base PEX polymer structure. Consequently, the finished pipes have poor pressure holding capability, typically fail the required pressure tests and often have impaired high temperature properties.

Semi-crystalline materials such as, for example, polyolefins, are characterized as having an amorphous phase and a crystalline phase. Much of their properties are derived from the amount and morphology of these two phases. Hardness and strength, as examples, are increased with increasing crystallinity whereas flexibility and toughness, as examples, are increased with decreasing crystallinity. This is generally true for high-crystalline materials like plastics, intermediate materials like plastomers and low-crystalline materials like elastomers or rubbers.

In many semi-crystalline materials, and particularly in semi-crystalline polyolefin plastics, the strength and hardness arise from the crystalline phase of the polymer. The crystallinity acts as hard-block crosslink points with interconnecting chains. The overall network formed resists deformation on strain. In plastics this results in high hardness and improved strength. The flexibility and toughness of the semi-crystalline polyolefin arises from the amorphous phase where the chains are entangled randomly. Freedom of the entangled chains to move provides a mechanism for the polymer to absorb impact and flex. There is a balance of desired properties in many polymer applications where better toughness or flexibility is achieved by reducing the crystallinity. However, lowering crystallinity reduces the strength and hardness of the polymer. Conversely, stronger, harder semi-crystalline materials are achieved by increasing the crystallinity at the expense of toughness and flexibility.

One way to extend this balance of properties and increase the strength or hardness without sacrificing toughness or flexibility is to crosslink the chains in the amorphous portion of the polymer. This creates a higher crosslink network density without increasing the crystallinity or hardness of the polyethylene. In ethylene homopolymers and copolymers the chains can be crosslinked in a number of ways including the free-radical chemistry of peroxides, silane chemistry, radical formation from high-energy radiation such as e-beams, and other methods.

To further affect the balance of properties, the addition of modifiers or plasticizers to the polymer is often used to soften the material and improve flexibility. It is understood that the modifiers need to be compatible with the host polymer and that they are generally excluded from the crystalline phase and reside predominantly in the amorphous phase of the host polymer. Typical modifiers can be high Mw, low density copolymers such as plastomers, reactor copolymers (R-COPO's), as well as low molecular weight fluid modifiers like mineral oil, white oil and paraffinic oils.

However, as the semi-crystalline polyolefins become more crystalline and plastic-like, it becomes more difficult to modify them. One reason for this is that there is much less amorphous phase for the modifier to occupy and another is that the compatibility with the host polymer often becomes low.

One way previously used to modify the properties of PE, including HD, metallocene, LD and LL in both thermoplastic blends or PEX, was to add lower density ethylene copolymers such as reactor copolymer (R-COPO) or ethylene butene (EB) or ethylene octene (EO) plastomers. When added to HDPE, these materials are incompatible and often form separate rubber domains within the amorphous phase of the host polymer. The resulting two phase morphology can provide impact resistance, in some cases, but these high Mw polymer modifiers also bring undesirable properties such as poor processing, loss of crosslinking efficiency and reduced toughness. They are often more difficult to blend, have reduced cut-through resistance, require a fine control of morphology and often have compatibility issues with the host polymer. In addition, adding a softer polymer modifier will generally reduce the tensile properties, but in an ineffective way. Often it requires a significant amount of rubber modifier to make a tensile property change in the host polymer. Overall, using rubber modifiers to improve flexibility is ineffective.

Another way to modify the properties of thermoplastic PE or PEX is to add fluid modifiers such as mineral oils, white oils and paraffinic oils. However, one problem encountered when using typical plasticizers in crosslinked polyolefin applications is that they act to reduce the efficiency of the cure systems. To counter this effect one must either limit the amount of fluid modifier used, or increase the amount of curative used to achieve the desired crosslink density and physical properties.

Another problem encountered with typical mineral oil modifiers is the compatibility with the host polymer. Since typical modifiers have broad molecular weight distribution (MWD) and a complex composition there are polar components and low molecular weight species that bloom to the surface of the host polymer. As the modifier migrates to the surface, its concentration in the host polymer is reduced over time, and the polymer properties can change significantly. In this example the modifier is said to have low permanence.

DE 1769723 discloses crosslinked PE compositions blended with various oils, apparently for use in electrical cables.

WO 2004/014988, WO 2004/014997, US 2004/0054040, US 2005/0148720, US 2004/0260001, US 2004/0186214, disclose blends of various polyolefins with non-functionalized plasticizers for multiple uses.

US 2006/0247331 and US 2006/0008643 disclose blends of polypropylene and non-functionalized plasticizers for multiple uses.

WO 2006/083540 discloses blends of polyethylene and non-functionalized plasticizers, but do not show specific blends of PE-X and non-functionalized plasticizers for multiple uses.

Silane crosslinked polyethylene for wire and cable applications is disclosed in US 7,153,571.

Other references of interest include US 2001/0056759, US 5,728,754, EP 0 757 076 A1, EP 0 755 970 A1, US 5,494,962, US 5,162,436, EP 0 407 098 B1, EP 0 404 011 A2, EP 0 344 014 A2, US 3,415,925, US 4,536,537, US 4,774,277, JP 56095938 A, EP 0 046 536 B1, and EP 0 448 259 B1.

### SUMMARY OF THE INVENTION

Surprisingly, it has been found that the use of certain liquid hydrocarbon modifiers in crosslinked polyethylene (PEX) do not reduce cure efficiency, and have exceptionally high permanence and compatibility in PEX, providing excellent property modification over time without reducing the crosslinked network density.

The present invention employs a polymer modifier added to a base polymer to increase the flexibility of the plastic material, wherein this modifier does not deleteriously interfere with the crosslinking or affect the base polymer structure and/or strength of the plastic material in undesirable ways. It is theorized that the polymer modifier in an embodiment only affects the amorphous regions of the polymer and does not interfere with the crosslinked molecular structure and/or the crystalline portion of the base polymer.

In one embodiment, the present invention provides a method of forming a crosslinked polyethylene article as defined in claim 1. The method can include: (1) blending a polyethylene resin with a flexibilizing amount of a non-functionalized plasticizer (NFP); (2) processing the blend into a shape of an article; and (3) crosslinking the blend to form the crosslinked polyethylene article. The NFP can have a viscosity index greater than 120, kinematic viscosity of from 3 to 300 cSt at 100°C, pour point less than -20°C, specific gravity less than 0.86, and flash point greater than 200°C, wherein the NFP contains less than 5 weight percent of functional groups selected from hydroxide, aryls, substituted aryls, halogens, alkoxys, carboxylates, esters, acrylates, oxygen, nitrogen, and carboxyl, based upon the weight of the NFP, and wherein the number of carbons of the NFP involved in olefinic bonds is less than 5% of the total number of carbon atoms in the NFP.

In an embodiment of the method, the polyethylene resin can include an ethylene based polymer comprising at least 50 mole % ethylene units and having less than 20 mole % propylene units. The polyethylene resin can be selected from the group consisting of low density polyethylene, high density polyethylene and combinations thereof.

In an embodiment of the method, the blend in the processing step can have a continuous, homogeneous matrix phase of a mixture of the polyethylene resin and the NFP. Alternatively or additionally, the blend can comprise at least 95 weight percent of the polyethylene resin by weight of polymer components of the blend.

In an embodiment of the method, the NFP comprises from about 0.5 to about 10 weight percent by weight of the polyethylene resin, preferably 0.5 to 5 weight percent. The NFP can be selected from poly-alpha-olefins (PAOs), Group III basestocks or mineral oils, high purity hydrocarbon fluids derived from a gas-to-liquids process (GTLs) and combinations thereof. In an embodiment, the NFP can comprise oligomers of C₅ to C₁₄ olefins. In an embodiment, the NFP can comprise a Group III basestock and have a kinematic viscosity at 100°C of 4 to 50 cSt, a number average molecular weight (Mn) of 400 to 1,000 g/mole, or a combination thereof. In an embodiment, the NFP can comprise a paraffinic composition derived from Fischer-Tropsch hydrocarbons and/or waxes, including wax isomerate lubricant oil basestocks and gas-to-liquids basestocks, having a kinematic viscosity at 100°C of about 3 cSt to about 300 cSt.

In an embodiment of the method, the blending can comprise blending in a melt stream. In some embodiments, the NFP is added to the polyethylene outside the melt stream, and in other embodiments the NFP is added into the melt stream. The melt blending can comprise compounding in a single screw extruder.

In an embodiment of the method, the blending can comprise introducing a cure system to the blend. The cure system can comprise an organic peroxide introduced into the blend at a temperature below a decomposition point of the peroxide, and the crosslinking can comprise heating the blend to a temperature above the decomposition point of the peroxide. The crosslinking in an embodiment can include a continuous vulcanization process downstream from an extruder. The crosslinking in another embodiment can comprise an Engel process wherein after the peroxide is introduced, the blend is rammed through a head maintained above the decomposition temperature of the peroxide to form a crosslinked extrudate.

In an embodiment of the method, the cure system can comprise a moisture-curable silane compound and the blend can be cured by exposing the shaped article to moisture. The moisture exposure can include contacting the shaped article with steam and/or hot water above a temperature of 40°C, or alternately, the moisture can be in the form of a chilled water bath (10°C or less) or ice. In another embodiment the moisture or humidity in the air can cure the silane. The silane compound can be introduced as a copolymerized comonomer in a reactor copolymer in the polyethylene resin. The blending can include introducing a masterbatch comprising moisture-curing catalyst into the blend. Alternatively or additionally, the silane compound can be grafted onto the polyethylene resin by reactive extrusion, and the graft resin can be mixed with a masterbatch comprising moisture-curing catalyst. In an embodiment, the method can comprise a one step process wherein the silane compound and a crosslinking catalyst are introduced into the blend in a single extruder. Alternatively or additionally, the method can comprise a two-step process wherein the silane compound and the crosslinking catalyst are serially introduced into the blend in separate extrusions.

In an embodiment of the method, the crosslinking can comprise electron beam irradiation of the shaped article.

In another embodiment, the present invention provides a crosslinked polyethylene article produced by the method described above. The crosslinked polyethylene article is selected from the group consisting of pipes, conduits, tubes, wire jacketing and insulation, and cable jacketing and insulation. The crosslinked polyethylene article in an embodiment can be an extrudate.

In another embodiment, the present invention provides a composition consisting essentially of PEX blended with from about 0.1 to about 10 percent by weight of the composition of an NFP. The NFP can have a viscosity index greater than 120, kinematic viscosity of from 3 to 300 cSt at 100°C, pour point less than -20°C, specific gravity less than 0.86, flash point greater than 200°C. The NFP can contain less than 5 weight percent of functional groups selected from hydroxide, aryls, substituted aryls, halogens, alkoxys, carboxylates, esters, acrylates, oxygen, nitrogen, and carboxyl, based upon the weight of the NFP. The number of carbons of the NFP involved in olefinic bonds can be less than 5% of the total number of carbon atoms in the NFP.

In an embodiment, the composition can be in the form of a pipe. The pipe can comprise a plurality of layers, and the PEX can comprise one layer. In an embodiment, the composition can be in the form of tubing. In an embodiment, the composition can comprise insulation or jacketing for wire or cable.

In an embodiment, the composition can comprise a tubular present in a structure selected from the group consisting of hot and cold water plumbing systems, drinking water systems, hydronic radiant heating systems, snow melting equipment, ice rink plumbing and wiring and refrigeration warehouse plumbing and wiring. The tubular comprises at least one layer comprising a composition consisting essentially of crosslinked polyethylene (PEX) blended with from 0.1 to 10 percent by weight of the composition of a non-functionalized plasticizer (NFP) having a viscosity index as measured following ASTM D2270 greater than 120, kinematic viscosity of from 3 to 300 cSt at 100°C, pour point less than -20°C, specific gravity less than 0.86, flash point greater than 200°C, and wherein the NFP contains less than 5 weight percent of functional groups selected from hydroxide, aryls, substituted aryls, halogens, alkoxys, carboxylates, esters, acrylates, oxygen, nitrogen, and carboxyl, based upon the weight of the NFP, and wherein the number of carbons of the NFP involved in olefinic bonds is less than 5% of the total number of carbon atoms in the NFP.

In an embodiment of the composition, the NFP can comprise oligomers of C₅ to C₁₄ olefins. Alternatively or additionally, the NFP can comprise a Group III basestock and have a kinematic viscosity at 100°C of 4 to 50 cSt, a number average molecular weight (Mn) of 400 to 1,000 g/mole, or a combination thereof. Alternatively or additionally, the NFP can comprise a paraffinic composition derived from Fischer-Tropsch hydrocarbons and/or waxes, including wax isomerate lubricant oil basestocks and gas-to-liquids basestocks, having a kinematic viscosity at 100°C of about 3 cSt to about 300 cSt.

In an embodiment of the composition, the crosslinked polyethylene can be obtained by crosslinking a blend of the NFP in a polyethylene resin comprising an ethylene based polymer comprising at least 50 mole % ethylene units and having less than 20 mole % propylene units. The polyethylene resin can be selected from low density polyethylene, high density polyethylene, and the like, and combinations thereof. The blend can have a continuous, homogeneous matrix phase of a mixture of the polyethylene resin and the NFP. The blend can comprise at least 95 weight percent of the polyethylene resin by weight of polymer components of the blend.

In an embodiment of the composition, the blend can be crosslinked with an organic peroxide. Alternatively or additionally, the blend can be crosslinked with a silane compound and moisture curing. The blend can comprise an intimate admixture with a masterbatch comprising moisture-curing catalyst. Alternatively or additionally, the polyethylene resin can comprise a reactor copolymer comprising a copolymerized silane compound. Alternatively or additionally, the blend can comprise a silane compound grafted onto the polyethylene resin by reactive extrusion and a masterbatch comprising moisture-curing catalyst in intimate admixture therewith. Alternatively or additionally, the blend can be crosslinked by electron beam irradiation.

### BRIEF DESCRIPTION OF THE DRAWINGS

Figure 1 plots the bend force and burst pressure of a crosslinked polyethylene (PEX) containing from 0.5 to 4.5 wt % modifier according to an embodiment of the invention as described in Examples 2-4 below.
Figure 2 shows the gel content, which is a measure of the crosslink efficiency, of a PEX containing from 0.5 to 4.5 wt % modifier according to an embodiment of the invention as described in Examples 2-4 below.
Figure 3A is a photomicrograph showing the rough surface appearance of a wire and cable PEX formulation without a liquid modifier with an extruder rpm of 80 and a temperature profile of 140°C / 180°C / 200°C / 185°C for comparative purposes as described in Comparative Example 4.
Figure 3B is a photomicrograph showing the relatively smoother surface appearance of a wire and cable PEX formulation of Example 14 (2.7 wt% modifier) using the same temperature profile and rpm as described in Example 14 according to an embodiment of the invention.
Figure 3C is a photomicrograph showing further improvement of surface profile obtained when the material of Figure 3B is cured according to an embodiment of the invention.
Figure 3D is a photomicrograph showing more improvement of the surface profile obtained from the Figure 3C material using the temperature profile 100°C / 160°C / 220°C / 200°C according to an embodiment of the invention.
Figure 4 plots the weight loss versus time in PEX pipe with and without modifier according to the present invention as described in Examples 21-23 below.

### DEFINITIONS

For purposes of this invention and the claims thereto when a polymer or oligomer is referred to as comprising an olefin, the olefin present in the polymer or oligomer is the polymerized or oligomerized form of the olefin, respectively. Likewise the use of the term polymer is meant to encompass homopolymers and copolymers. In addition the term copolymer includes any polymer having 2 or more chemically distinct monomers types. Thus, as used herein, the terms "polyethylene," "ethylene polymer," and "ethylene based polymer" mean a polymer or copolymer comprising at least 50 mole % ethylene units (preferably at least 70 mole % ethylene units, more preferably at least 80 mole % ethylene units, even more preferably at least 90 mole % ethylene units, even more preferably at least 95 mole % ethylene units or 100 mole % ethylene units); and having less than 20 mole % propylene units (preferably less than 15 mole %, preferably less than 10 mole %, preferably less than 5 mole %, preferably 0 mole % propylene units), which precludes an ethylene copolymer from being an ethylene propylene rubber (EPR) as defined below. Furthermore, the term "polyethylene composition" means a blend containing one or more polyethylene components.

For purposes of this invention an oligomer is defined to have a number-average molecular weight (Mn) of 10,000 g/mole or less.

For purposes of this invention and the claims thereto, an ethylene polymer having a density of 0.86 g/cm³ or less is referred to as an ethylene elastomer or elastomer, an ethylene polymer having a density of more than 0.86 to less than 0.910 g/cm³ is referred to as an ethylene plastomer or plastomer; an ethylene polymer having a density of 0.910 to 0.940 g/cm³ is referred to as a low density polyethylene (LDPE), including linear low density polyethylene (LLDPE) which refers to ethylene polymers in this density range made using a heterogeneous catalyst, as well as ethylene polymers in this density range made in a high pressure process using a free radical catalyst; and an ethylene polymer having a density of more than 0.940 g/cm³ is referred to as a high density polyethylene (HDPE).

For purposes of this invention and the claims thereto an EP rubber or EPR is defined to be a copolymer of ethylene and propylene, and optionally diene monomer(s), chemically crosslinked (i.e., cured) or not, where the ethylene content is from 35 to 80 weight %, the diene content is 0 to 15 weight %, and the balance is propylene; and where the copolymer has a Mooney viscosity, ML(1+4) @ 125°C (measured according to ASTM D1646) of 15 to 100. For purposes of this invention and the claims thereto an EPDM or EPDM rubber is defined to be an EPR having diene present.

For the purposes of this invention a liquid is defined to be a fluid that has no distinct melting point above 0°C, preferably no distinct melting point above -20°C; and has a kinematic viscosity at 100°C of 3000 cSt or less, preferably 1000 cSt or less and/or a kinematic viscosity at 40°C of 35,000 cSt or less, preferably 10,000 cSt or less.

For purposes of this invention and the claims thereto Group I, II, and III basestocks are defined to be mineral oils having the following properties:

| Basestock | Saturates (wt %) | Sulfur (wt %) | Viscosity Index |
|---|---|---|---|
| Group I | <90 and/or | ≥0.03 and | ≥80 and <120 |
| Group II | ≥90 and | ≤0.03 and | ≥80 and <120 |
| Group III | ≥90 and | ≤0.03 and | ≥120 |

| | | | |
|---|---|---|---|
| Wt % saturates, wt % sulfur, and Viscosity Index are measured following ASTM D2007, ASTM D2622, and ASTM D2270, respectively. | | | |

For purposes of this invention and the claims thereto Group IV basestocks are defined to be polyalphaolefins (PAO's), which are hydrocarbon liquids manufactured by the catalytic oligomerization or polymerization of linear alpha-olefins having 5 or more carbon atoms, preferably 6 or more carbon atoms, preferably 8 or more carbon atoms. The PAO's may be characterized by any degree of tacticity, including isotacticity or syndiotacticity, and/or may be atactic. In another embodiment the PAO has more than 50% meso dyads as measured by ¹³C NMR, preferably more than 60%. In another embodiment the PAO has more than 50% racemic dyads as measured by ¹³C NMR, preferably more than 60%, as measured according to or as described in WO2007011459A1.

For purposes of the present invention and the claims thereto, the term mineral oil includes any petroleum-based oil; derived from petroleum crude oil that has been subjected to refining steps (such as distillation, solvent processing, hydroprocessing, and/or dewaxing) to achieve the final oil. This also includes petroleum-based oils that are extensively purified and/or modified through severe processing treatments. For purposes of this invention and the claims thereto synthetic oils are those oils that have been manufactured by combining monomer units using catalysts and/or heat.

For purposes of this invention and the claims thereto when melting point is referred to and there is a range of melting temperatures, the melting point is defined to be the peak melting temperature from a differential scanning calorimetry (DSC) trace, and when there is more than one melting peak, it refers to the peak melting temperature for the largest peak among principal and secondary melting peaks, as opposed to the peak occurring at the highest temperature, thereby reflecting the largest contribution to the calorimetric response of the material.

For purposes of this invention and claims thereto, relative flexibility is determined by taking the ratio of the inverse of the bend test values as described herein. For example, a crosslinked polyethylene (PEX) pipe specimen containing an NFP with a bend test value of 0.454 MPa is 10 percent more flexible than the same PEX pipe specimen without NFP having a bend test value of 0.5 MPa.

### DETAILED DESCRIPTION OF THE INVENTION

Accordingly, the present invention is directed in one embodiment to crosslinked polyethylene (PEX), wherein the base polymer is intermixed with a polymer modifier which affects the amorphous region of the polymer, leaving the crystalline portion of the base polymer unaffected or substantially unaffected. Consequently, the density of the amorphous region is lowered, resulting in a more flexible final product, while the crosslinked molecular structure and/or crystalline portion of the polymer, which controls the strength of the base polymer, and the final product remains strong. In one non-limiting embodiment, the modifier comprises a non-functionalized plasticizer (NFP) as defined herein.

One embodiment of a method for producing the plastic material can comprise mixing the NFP with the base polymer, preferably outside of the melt stream in a single screw extruder. Additional embodiments of the methods include introduction of the NFP into the melt stream and, optionally, utilizing multiple screw extruders or injection molding plasticizing units. Introduction of the NFP using a pre-compounded carrier such as porous pellets can also be employed according to an embodiment. The NFP/base resin mixtures are then formed into the shape of the desired article and crosslinked.

The present application has particular utility in the production of PEX tubulars, e.g. tubing, conduits, piping, and wire and cable applications such as insulation or jacketing and the like. This tubing can be used in a variety of environments, such as fire protection, plumbing, heating, gas distribution, and the like. The tubing also is particularly useful in the production of barrier pipes for domestic heating systems. However, the invention is not limited to use with tubulars, but can he practiced with any polymeric article.

The NFP modifier can be used in low levels without changing the final crosslink gel levels of the polymer. This results in benefits unmatched in any other polymer additive or plastomer. As discussed above, the previously used polymer enhancers changed the base characteristics of the polymer and reduced the overall pipe performance. Often, to obtain the desired flexibility, loading levels of other additives had to exceed 20-25%. This resulted in a pipe that would not pass the hydrostatic requirements of ASTM F876. As used herein, the term consisting essentially of is intended to refer to embodiments excluding components other than the ethylene polymer and NFP modifier to an extent that a pipe made from the material would not pass the PEX specifications, especially the hydrostatic requirements of ASTM F876.

In an embodiment, the polyethylene/modifier composition is made into an article that can have improved dimensional stability. For pipes and tubes, the improved dimensional stability can provide a more consistent wall thickness, which can have a surprisingly profound affect on burst strength and crack resistance. Although the invention is not limited by theory, it is believed the dimensional stability of the polyethylene/modifier composition is due to faster relaxation of the polyethylene in the presence of the modifier and improved mobility in the polymer matrix that can lead to a more random orientation of the chains. This lack of orientation provides better overall strength and improved isotropy, rather than, for example, high strength in the machine direction and low strength in the transverse direction that would otherwise be obtained with highly oriented polymers. According to an embodiment of the invention, a tube or pipe made of the polyethylene/modifier composition has less internal stress and/or less polymer orientation, compared to other polyethylene compositions with slower relaxation times that result in more variation in the wall thickness.

This invention relates in an embodiment to crosslinked polyethylene compositions comprising one or more ethylene polymers crosslinked in a blend with or otherwise in the presence of one or more modifiers, preferably liquid modifier(s).

Typically, the ethylene polymer(s) are present in the compositions of the present invention at 50 weight % (wt %) or more, preferably from 50 to 99.9 wt % in another embodiment, and from 60 to 99.5 wt % in yet another embodiment, and from 70 to 99 wt % in yet another embodiment, and from 80 to 99 wt % in yet another embodiment, and from 90 to 99 wt % in yet another embodiment, and from 95 to 99 wt % in yet another embodiment, wherein a desirable range may be any combination of any upper wt % limit with any lower wt % limit described herein and the wt % is based on the weight of the composition.

In another embodiment the ethylene polymer(s) is present at 80 to 99.99 wt %, alternately 90 to 99.5 wt %, alternately 95 to 99 wt %, and the modifier is present at 20 to 0.01 wt %, alternately 10 to 0.5 wt %, alternately 5 to 1 wt %, based upon the weight of the ethylene polymer(s) and the modifier(s).

In another embodiment, the ethylene polymers are present in the compositions in an amount of at least 50 wt %, alternately at least 60 wt %, alternately at least 70 wt %, alternately at least 80 wt %, alternately at least 90 wt %, alternately at least 95 wt %, alternately at least 97 wt %, alternately at least 98 wt %, alternately at least 99 wt %, alternately at least 99.5 wt %, alternately at least 99.9 wt %, by weight of the total polymer components in the composition (exclusive of the modifier, fillers and other non-polymeric additives or components).

In another embodiment the modifier(s) are present in the compositions of the present invention at 0.1 wt % or more, preferably at 1 wt % or more, and from less than 20 to 0.1 wt % in another embodiment, and from 10 to 0.5 wt % in another embodiment, and from 5 to 1 wt % in yet another embodiment, wherein a desirable range may be any combination of any upper wt % limit with any lower wt % limit described herein and the wt % is based on the weight of the composition.

Preferred compositions of the present invention can be characterized in that the weight of the modified composition decreases less than 3%, preferably less than 2%, preferably less than 1%, preferably less than 0.5%, preferably less than 0.1%, preferably less than 0.05%, preferably less than 0.01%, when plasticizer permanence is determined by ASTM D1203 (0.25 mm thick sheet, 300 hours in dry 70°C oven). Weight loss here refers to the reduction in weight in excess of that measured for the unmodified crosslinked polyethylene under the same test conditions.

In one or more embodiments, the composition contains less than 10 wt%, propylene polymer, preferably less than 7 wt %, preferably less than 5 wt %, preferably less than 4 wt %, preferably less than 3 wt %, preferably less than 2 wt %, preferably less than 1 wt %, based upon the weight of the composition. A propylene polymer is a polymer having at least 50 mole% propylene. In another embodiment, the composition is essentially free of propylene polymer, alternately the composition comprises 0% propylene polymer.

Alternately, in one or more embodiments, the compositions comprises less than 10 wt% (preferably less than 5 wt%, preferably less than 4 wt%, preferably less than 3 wt%, preferably less than 2 wt%, preferably less than 1 wt%) of a propylene polymer having a melting point of 40°C or more. In another embodiment, the composition is essentially free of propylene polymer having a melting point of 40°C or more, alternately the composition comprises 0% propylene polymer having a melting point of 40°C or more.

In another embodiment, the crosslinked polyethylene/modifier compositions of this invention comprise less than 10 wt % (preferably less than 5 wt %, preferably less than 4 wt %, preferably less than 3 wt%, preferably less than 2 wt%, preferably less than 1 wt %) of EP rubber, based upon the total weight of the composition. In another embodiment, the composition is essentially free of EP rubber, alternately the composition comprises 0% EP rubber.

In an alternate embodiment, the compositions comprise less than 10 wt% (preferably less than 5 wt%, preferably less than 4 wt%, preferably less than 3 wt%, preferably less than 2 wt%, preferably less than 1 wt%) of a butene polymer (a butene polymer is a polymer having at least 50 mole% butene monomer), based upon the total weight of the composition. In another embodiment, the composition is essentially free of butene polymer, alternately the composition comprises 0% butene polymer.

In another embodiment, the ethylene polymer(s) comprises 0% diene. In another embodiment the total diene content of all ethylene polymers present in the composition is 0%. In another embodiment the ethylene polymer(s) comprise less than 30 weight % diene, preferably less than 20 wt %, preferably less than 10 wt %, preferably less than 5 weight % diene, preferably less than 2.5 weight %, preferably less than 1 weight % (based upon the weight of the ethylene polymer) and preferably has a density greater than 0.86 g/cm³, preferably greater than 0.87 g/cm³.

In another embodiment the crosslinked polyethylene/modifier compositions comprise less than 50 weight % of ethylene elastomer(s), preferably less than 40 wt %, preferably less than 30 wt %, preferably less than 20 wt %, preferably less than 10 wt %, more preferably less than 5 wt %, more preferably less than 1 wt %, based upon the weight of the composition. In another embodiment, the composition is essentially free of ethylene elastomer, alternately the composition comprises 0% ethylene elastomer.

In another embodiment the modifier is used to replace some or all of the elastomer and/or plastomer in a crosslinked polyethylene/elastomer composition comprising up to 25 wt % total elastomer, plastomer or combination thereof, by weight of the composition. In one embodiment, the crosslinked polyethylene/modifier compositions of this invention comprise elastomer and/or plastomer in an amount of from at least 0.1 total weight % up to less than 25 total weight %, preferably less than 20 total weight %, preferably less than 10 total weight %, preferably less than 5 total weight %, and preferably less than 1 total weight %, of elastomer and/or plastomer, based upon the weight of the composition. In another embodiment, the composition is essentially free of elastomer and plastomer, or alternately the composition comprises 0% elastomer and plastomer. In one embodiment the polyethylene/modifier composition comprises at least one polyethylene base polymer optionally selected from HDPE, LDPE, LLDPE, VLDPE or a mixture thereof; an NFP modifier; and at least one ethylene elastomer or plastomer optionally selected from the group consisting of EPR, EPDM, EP, EB, EH EO, or a combination thereof. In one embodiment, a tubular (pipe or tube) made of a crosslinked polyethylene-modifier-elastomer and/or -plastomer composition passes the hydrostatic requirements of ASTM F876.

In another embodiment, the crosslinked polyethylene/modifier compositions may further comprise a copolymer or co-oligomer of ethylene and one or more alpha-olefin(s), such as those disclosed in US 6,639,020.

In another embodiment, the crosslinked polyethylene/modifer compositions of this invention comprise less than 20 weight %, preferably less than 10 weight %, preferably less than 1 weight %, of a liquid homopolymer or copolymer of isoprene and or butadiene having a kinematic viscosity at 40°C of 10,000 cSt or less, based upon the weight of the composition. In another embodiment, the composition is essentially free of liquid homopolymer or copolymer of isoprene and or butadiene having a kinematic viscosity at 40°C of 10,000 cSt or less, alternately the composition comprises 0% liquid homopolymer or copolymer of isoprene and or butadiene having a kinematic viscosity at 40°C of 10,000 cSt or less. In another embodiment, the crosslinked polyethylene/modifier compositions of this invention comprise less than 20 weight %, preferably less than 10 weight %, preferably less than I weight %, of a liquid homopolymer or copolymer of isoprene and or butadiene having a kinematic viscosity at 40°C between 2,000 cSt and 20 cSt. In another embodiment, the composition is essentially free of liquid homopolymer or copolymer of isoprene and or butadiene having a kinematic viscosity at 40°C between 2,000 cSt and 20 cSt, alternately the composition comprises 0% liquid homopolymer or copolymer of isoprene and or butadiene having a kinematic viscosity at 40°C between 2,000 cSt and 20 cSt.

The modifiers described herein are blended with at least one ethylene polymer to prepare the crosslinked polyethylene compositions of this invention. In one aspect of the invention, the ethylene polymer base resin is selected from ethylene homopolymer, ethylene copolymers, and blends thereof. Useful copolymers comprise one or more comonomers in addition to ethylene and can be a random copolymer, a statistical copolymer, a block copolymer, and/or blends thereof. In particular, the ethylene polymer blends described as the base resin herein may be physical blends or in situ blends of more than one type of ethylene polymer or blends of ethylene polymers with polymers other than ethylene polymers where the ethylene polymer component is the majority component (e.g. greater than 50 wt %). The method of making the polyethylene is not critical, as it can be made by slurry, solution, gas phase, high pressure or other suitable processes, and by using catalyst systems appropriate for the polymerization of polyethylenes, such as Ziegler-Natta-type catalysts, chromium catalysts, metallocene-type catalysts, other appropriate catalyst systems or combinations thereof, or by free-radical polymerization. In a preferred embodiment the ethylene polymers are made by the catalysts, activators and processes described in US 6,342,566, US 6,384,142, WO 03/040201, WO 97/19991 and US 5,741,563. Such catalysts are well known in the art, and are described in, for example, ZIEGLER CATALYSTS (Gerhard Fink, Rolf Mulhaupt and Hans H. Brintzinger, eds., Springer-Verlag 1995); Resconi et al.; and I, II METALLOCENE-BASED POLYOLEFINS (Wiley & Sons 2000).

Preferred ethylene polymers and copolymers that are useful as the base resin in this invention include those sold by ExxonMobil Chemical Company in Houston Tex., including those commercially available under the trade designations ExxonMobil HDPE, ExxonMobil LLDPE, and ExxonMobil LDPE; and those sold under the trade designations EXACT™., EXCEED™, ESCORENE™, ESCOR™, PAXON™, and OPTEMA™.

Preferred ethylene homopolymers and copolymers useful as the base resin in this invention typically have: (1) a weight-average molecular weight (Mw) of 20,000 to 2,000,000 g/mole, preferably 30,000 to 1,000,000, more preferably 40,000 to 200,000, as measured by size exclusion chromatography; and /or (2) a molecular weight distribution (Mw/Mn or MWD or PDI) of 1 to 40, preferably 1.6 to 20, more preferably 1.8 to 10, more preferably 1.8 to 4, preferably 8 to 25 as measured by size exclusion chromatography; and /or (3) a melting temperature (Tm) (first melt peak) of 30° to 150°C, preferably 30° to 140°C, preferably 50° to 140°C, more preferably 60° to 135°C, as determined by the DSC method; and/or (4) a crystallinity of 5 to 80%, preferably 10 to 70, more preferably 20 to 60% as measured by the DSC method; and /or (5) a heat of fusion of 300 J/g or less, preferably 10 to 260 J/g, more preferably 20 to 200 J/g as measured by the DSC method; and/or (6) a crystallization temperature (Tc) of 15° to 130°C, preferably 20° to 120°C, more preferably 25° to 110°C, preferably 60° to 125°C; and/or (7) a heat deflection temperature of 30° to 120°C, preferably 40° to 100°C, more preferably 50° to 80°C; and/or (8) a Shore hardness (D scale) of 10 or more, preferably 20 or more, preferably 30 or more, preferably 40 or more, preferably 100 or less, preferably from 25 to 75 (as measured by ASTM D 2240); and/or (9) a percent crystallinity of at least 30%, preferably at least 40%, alternatively at least 50%, as determined by the DSC method; and/or (10) a percent amorphous content of at least 50%, alternatively at least 60%, alternatively at least 70%, even alternatively between 50% and 95%, or 70% or less, preferably 60% or less, preferably 50% or less as determined by subtracting the percent crystallinity from 100, and/or (11) a branching index (g') of 0.2 to 2.0, preferably 0.5 to 1.5, preferably 0.7 to 1.1; and/or (12) a density of 0.85 to 0.97 g/cm³, preferably 0.86 to 0.965 g/cm³, preferably 0.88 to 0.96 g/cm³, alternatively between 0.860 and 0.910 g/cm³, alternatively between 0.910 and 0.940 g/cm³ or alternatively between 0.94 to 0.965 g/cm³.

The polyethylene base resin may be an ethylene homopolymer, such as HDPE. In another embodiment the ethylene homopolymer has an MWD of up to 40, preferably ranging from 1.5 to 20, and from 1.8 to 10 in another embodiment, and from 1.9 to 5 in yet another embodiment, and from 2.0 to 4 in yet another embodiment. In another embodiment, the 1% secant flexural modulus falls in a range of 200 to 1000 MPa, and from 300 to 800 MPa in another embodiment, and from 400 to 750 MPa in yet another embodiment, wherein a desirable polymer may exhibit any combination of any upper flexural modulus limit with any lower flexural modulus limit. The melt index (MI) of preferred ethylene homopolymers used as the base resin range from 0.05 to 800 dg/min in one embodiment, and from 0.1 to 100 dg/min in another embodiment, as measured according to ASTM D1238 (190°C, 2.16 kg). Preferably the MI of the base resin is at least 1 dg/min.

In another embodiment of the invention, the ethylene polymer base resin is an ethylene copolymer, either random, or block, of ethylene and one or more comonomers selected from C₃ to C₂₀ α-olefins, typically from C₃ to C₁₀ α-olefins in another embodiment. Preferably the comonomers are present from 0.1 wt % to 50 wt % of the copolymer in one embodiment, and from 0.5 to 30 wt % in another embodiment, and from 1 to 15 wt % in yet another embodiment, and from 0.1 to 5 wt % in yet another embodiment, wherein a desirable copolymer comprises ethylene and C₃ to C₂₀ α-olefins derived units in any combination of any upper wt % limit with any lower wt % limit described herein. Preferably the ethylene copolymer will have an Mw of from greater than 8,000 g/mole in one embodiment, and greater than 10,000 g/mole in another embodiment, and greater than 12,000 g/mole in yet another embodiment, and greater than 20,000 g/mole in yet another embodiment, and less than 1,000,000 g/mole in yet another embodiment, and less than 800,000 g/mole in yet another embodiment, wherein a desirable copolymer may comprise any upper molecular weight limit with any lower molecular weight limit described herein.

In another embodiment the ethylene copolymer of the base resin comprises ethylene and one or more other monomers selected from the group consisting of ethylene and C₃ to C₂₀ linear, branched or cyclic monomers, and in some embodiments is a C₃ to C₁₂ linear or branched α-olefin, preferably butene, pentene, hexene, heptene, octene, nonene, decene, dodecene, 4-methyl-pentene-1,3-methyl pentene-1,3,5,5-trimethyl-hexene-1, and the like. The monomers may be present at up to 50 weight %, preferably from 0 to 40 weight %, more preferably from 0.5 to 30 weight %, more preferably from 2 to 30 weight %, more preferably from 5 to 20 weight %.

Preferred linear α-olefins useful as comonomers for the ethylene copolymers useful as the base polyethylene resins in this invention include C₃ to C₈ alpha-olefins, more preferably 1-butene, 1-hexene, and 1-octene, even more preferably 1-hexene. Preferred branched alpha-olefins include 4-methyl-1-pentene, 3-methyl-1-pentene, and 3,5,5-trimethyl-1-hexene, 5-ethyl-1-nonene. Preferred aromatic-group-containing monomers contain up to 30 carbon atoms. Suitable aromatic-group-containing monomers comprise at least one aromatic structure, preferably from one to three, more preferably a phenyl, indenyl, fluorenyl, or naphthyl moiety. The aromatic-group-containing monomer further comprises at least one polymerizable double bond such that after polymerization, the aromatic structure will be pendant from the polymer backbone. The aromatic-group containing monomer may further be substituted with one or more hydrocarbyl groups including but not limited to C₁ to C₁₀ alkyl groups. Additionally two adjacent substitutions may be joined to form a ring structure. Preferred aromatic-group-containing monomers contain at least one aromatic structure appended to a polymerizable olefinic moiety. Particularly preferred aromatic monomers include styrene, alpha-methylstyrene, para-alkylstyrenes, vinyltoluenes, vinylnaphthalene, allyl benzene, and indene, especially styrene, paramethyl styrene, 4-phenyl-1-butene and allyl benzene.

Comonomers containing non-aromatic cyclic groups are also preferred. These monomers can contain up to 30 carbon atoms. Suitable non-aromatic cyclic group containing monomers preferably have at least one polymerizable olefinic group that is either pendant on the cyclic structure or is part of the cyclic structure. The cyclic structure may also be further substituted by one or more hydrocarbyl groups such as, but not limited to, C₁ to C₁₀ alkyl groups. Preferred non-aromatic cyclic group containing monomers include vinylcyclohexane, vinylcyclohexene, vinylnorbornene, ethylidene norbornene, cyclopentadiene, cyclopentene, cyclohexene, cyclobutene, vinyladamantane and the like.

Preferred diolefin monomers useful in this invention include any hydrocarbon structure, preferably C₄ to C₃₀, having at least two unsaturated bonds, wherein at least two of the unsaturated bonds are readily incorporated into a polymer by either a stereospecific or a non-stereospecific catalyst(s). It is further preferred that the diolefin monomers be selected from alpha, omega-diene monomers (i.e. di-vinyl monomers). More preferably, the diolefin monomers are linear di-vinyl monomers, most preferably those containing from 4 to 30 carbon atoms. Examples of preferred dienes include butadiene, pentadiene, hexadiene, heptadiene, octadiene, nonadiene, decadiene, undecadiene, dodecadiene, tridecadiene, tetradecadiene, pentadecadiene, hexadecadiene, heptadecadiene, octadecadiene, nonadecadiene, icosadiene, heneicosadiene, docosadiene, tricosadiene, tetracosadiene, pentacosadiene, hexacosadiene, heptacosadiene, octacosadiene, nonacosadiene, triacontadiene, particularly preferred dienes include 1,6-heptadiene, 1,7-octadiene, 1,8-nonadiene, 1,9-decadiene, 1,10-undecadiene, 1,11-dodecadiene, 1,12-tridecadiene, 1,13-tetradecadiene, and low molecular weight polybutadienes (Mw less than 1000 g/mole). Preferred cyclic dienes include cyclopentadiene, vinylnorbornene, norbornadiene, ethylidene norbornene, divinylbenzene, dicyclopentadiene or higher ring containing diolefins with or without substituents at various ring positions.

In a preferred embodiment one or more dienes are present in the ethylene polymer of the base resin at up to 10 weight %, preferably at 0.00001 to 2 weight %, preferably 0.002 to 1 weight %, even more preferably 0.003 to 0.5 weight %, based upon the total weight of the composition. In some embodiments 500 ppm or less of diene is added to the polymerization, preferably 400 ppm or less, preferably or 300 ppm or less. In other embodiments at least 50 ppm of diene is added to the polymerization, or 100 ppm or more, or 150 ppm or more.

In a preferred embodiment of the present invention, the base resin comprises ethylene polymers have an Mw within the range having an upper limit of 5,000,000 g/mole, 1,000,000 g/mole, or 500,000 g/mole, and a lower limit of 10,000 g/mole, 20,000 g/mole, or 80,000 g/mole.

Preferred ethylene polymers for the base resins of the present invention have an MWD ranging from 1.5 to 20, and from 1.6 to 15 in another embodiment, and from 1.7 to 10 in yet another embodiment, and from 1.8 to 5 in yet another embodiment, and from a lower limit of 1.5, 1.8, or 2.0 to an upper limit of 40, 20, 10, 5, or 4.5 in yet another embodiment.

The MI of preferred ethylene polymers in the base resins, as measured according to ASTM D1238 (190°C, 2.16 kg), ranges from 0.02 dg/min to 800 dg/min in one embodiment, from 0.05 to 500 dg/min in another embodiment, and from 0.1 to 100 dg/min in another embodiment. In another embodiment of the present invention, the polyethylene has a MI of 20 dg/min or less, 7 dg/min or less, 5 dg/min or less, or 2 dg/min or less, or less than 2 dg/min. In yet another embodiment, the polymer has a Mooney viscosity, ML(1+4) @ 125°C (measured according to ASTM D1646), of 100 or less, 75 or less, 60 or less, or 30 or less.

In yet another embodiment, the 1% secant flexural modulus of preferred ethylene polymers in the base resin (prior to crosslinking) ranges from 5 to 1000 MPa, and from 10 to 800 MPa in another embodiment, and from 5 to 200 MPa in yet another embodiment, wherein a desirable polymer may exhibit any combination of any upper flexural modulus limit with any lower flexural modulus limit.

The crystallinity of preferred ethylene polymers useful in the base resins herein may be expressed in terms of heat of fusion. Embodiments of the present invention include polymers having a heat of fusion, as determined by DSC, ranging from a lower limit of 0.1 J/g, or preferably 1.0 J/g, to an upper limit of 260 J/g, or preferably 240 J/g.

The crystallinity of the base resin polymer may also be expressed in terms of percent crystallinity. The percent crystallinity is determined according to the following formula: X% = ((Hf-Pe J/g)/(290 J/g)) x 100, where by X% is percent crystallinity, Hf-PE is the heat of fusion of the ethylene polymer in questions as obtained by the DSC method described herein. Preferably, the polymer has a crystallinity of from 25 to 90 %, preferably 40 to 85%, more preferably 50 to 80%.

The level of crystallinity may be reflected in the melting point. In one embodiment of the present invention, the ethylene polymer in the base resin has a single melting point. Typically, a sample of ethylene copolymer will show secondary melting peaks adjacent to the principal peak, which are considered together as a single melting point. The highest of these peaks is considered the melting point. The polymer preferably has a melting point by DSC ranging from an upper limit of 150°C, 130°C, 100°C, 80°C, or 60°C, to a lower limit of 0°C, 20°C, 25°C., 30°C;, 35°C, 40°C, or 45°C.

The polyolefin compositions in one embodiment of the present invention include at least one non-functionalized plasticizer (NFP) used to modify the polyethylene base resin and resulting crosslinked polyethylene. As used herein, an NFP is a hydrocarbon liquid, which does not include to an appreciable extent functional groups selected from hydroxide, aryls and substituted aryls, halogens, alkoxys, carboxylates, esters, carbon unsaturation, acrylates, oxygen, nitrogen, and carboxyl. By "appreciable extent," it is meant that these groups and compounds comprising these groups are not deliberately added to the NFP, and if present at all, are present in embodiments at less than 5 percent by weight of the NFP, or less than 4, 3, 2, 1, 0.7, 0.5, 0.3, 0.1, 0.05, 0.01, or 0.001 wt%, based upon the weight of the NFP.

In one embodiment, aromatic moieties (including any compound whose molecules have the ring structure characteristic of benzene, naphthalene, phenanthrene, anthracene, etc.) are substantially absent from the NFP. In another embodiment, naphthenic moieties (including any compound whose molecules have a saturated ring structure such as would be produced by hydrogenating benzene, naphthalene, phenanthrene, anthracene, etc.) are substantially absent from the NFP. By "substantially absent," it is meant that these compounds are not added deliberately to the compositions and if present at all, are present at less than 0.5 wt%, preferably less than 0.1 wt% by weight of the NFP.

In another embodiment, the NFP does not contain olefinic unsaturation to an appreciable extent. By "appreciable extent of olefinic unsaturation" it is meant that the carbons involved in olefinic bonds account for less than 10% of the total number of carbons in the NFP, preferably less than 8%, 6%, 4%, 2%, 1%, 0.7%, 0.5%, 0.3%, 0.1%, 0.05%, 0.01%, or 0.001%. In some embodiments, the percent of carbons of the NFP involved in olefinic bonds is between 0.001 and 10% of the total number of carbon atoms in the NFP, preferably between 0.01 and 5%, preferably between 0.1 and 2%, more preferably between 0.1 and 1%.

Particularly preferred NFPs include poly-alpha-olefins (PAO's), Group III basestocks, and high purity hydrocarbon fluids derived from a so-called gas-to-liquids process (GTL), having a viscosity index greater than 100, pour point less than -20°C, specific gravity less than 0.86, and flash point greater than 200°C. In various embodiments, the NFP comprises or preferably consists essentially of paraffins having from 6 to 200 carbon atoms, 8 to 100 carbon atoms, 20 to 1500 carbon atoms, 25 to 500 carbon atoms, 30 to 500 carbon atoms, 40 to 500 carbon atoms, 40 to 250 carbon atoms, 30 to 150 carbon atoms, or 20 to 100 carbon atoms. In a preferred embodiment, the NFP comprises oligomers of C₅ to C₂₄ olefins.

In another embodiment of the present invention, the NFP comprises a PAO liquid with a pour point (as measured by ASTM D 97) of -10°C or less and and a kinematic viscosity at 100°C (measured by ASTM D 445) of 3 cSt or more. PAO liquids are described in, for example, US 3,149,178; US 4,827,064; US 4,827,073; US 5,171,908; and US 5,783,531 and in SYNTHETIC LUBRICANTS AND HIGH-PERFORMANCE FUNCTIONAL FLUIDS (Leslie R. Rudnick & Ronald L. Shubkin, ed. Marcel Dekker, Inc. 1999), p. 3-52.

PAO liquids may be conveniently prepared by the oligomerization of an α-olefin in the presence of a polymerization catalyst, such as a Friedel-Crafts catalyst (including, for example, AlCl₃, BF₃, and complexes of BF₃ with water, alcohols, carboxylic acids, or esters), a coordination complex catalyst (including, for example, the ethylaluminum sesquichloride + TiCl₄ system), or a homogeneous or heterogeneous (supported) catalyst more commonly used to make polyethylene and/or polypropylene (including, for example, Ziegler-Natta catalysts, metallocene or other single-site catalysts, and chromium catalysts).

In one embodiment, the PAO comprises C₂₀ to C₁₅₀₀ (preferably C₃₀ to C₈₀₀, more preferably C₃₅ to C₄₀₀, most preferably C₄₀ to C₂₅₀) oligomers of α-olefins. These oligomers are dimers, trimers, tetramers, pentamers, etc. of C₃ to C₂₄ (preferably C₅ to C₁₈, more preferably C₆ to C₁₄, even more preferably C₈ to C₁₂, most preferably C₁₀) branched or linear α-olefins, provided that C₃ and C₄ α-olefins are present at 10 wt% or less. In another embodiment, the PAO comprises C₃ to C₂₄ (preferably C₅ to C₁₈, more preferably C₆ to C₁₄, most preferably C₈ to C₁₂) linear α-olefins (LAOs), provided that C₃ and C₄ LAOs are present at 10 wt% or less. Suitable olefins include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, and blends thereof. Oligomers of LAOs with only even carbon numbers between 6 and 18 (inclusive) are particularly preferred.

In one embodiment, a single LAO is used to prepare the oligomers. In this case, a preferred embodiment involves the oligomerization of 1-decene, and the PAO is a mixture of oligomers, including, for example, dimers, trimers, tetramers, pentamers, and higher, of 1-decene. In another embodiment, the PAO comprises oligomers of two or more C₃ to C₁₈ LAOs, to make bipolymer or terpolymer or higher-order copolymer combinations, provided that C₃ and C₄ LAOs are present at 10 wt% or less. In this case, a preferred embodiment involves the oligomerization of a mixture of 1-octene, 1-decene, and 1-dodecene, and the PAO is a mixture of oligomers (for example, dimers, trimers, tetramers, pentamers, and higher) of 1-octene/1-decene/1-dodecene terpolymer.

In another embodiment; the PAO comprises oligomers of a single alpha-olefin species having a carbon number of 5 to 24 (preferably 6 to 18, more preferably 8 to 12, most preferably 10). In another embodiment, the NFP comprises oligomers of mixed alpha-olefins (i.e., involving two or more alpha-olefin species), each alpha-olefin having a carbon number of 3 to 24 (preferably 5 to 24, more preferably 6 to 18, most preferably 8 to 12), provided that alpha-olefins having a carbon number of 3 or 4 are present at 10 wt% or less. In a particularly preferred embodiment, the PAO comprises oligomers of mixed alpha-olefins (i.e., involving two or more alpha-olefin species) where the weighted average carbon number for the alpha-olefin mixture is 6 to 14 (preferably 8 to 12, preferably 9 to 11).

In another embodiment, the PAO comprises oligomers of one or more α-olefin with repeat unit formulas of -[CHR-CH₂]- where R is a C₃ to C₁₈ saturated hydrocarbon branch. In a preferred embodiment, R is constant for all oligomers. In another embodiment, there is a range of R substituents covering carbon numbers from 3 to 18. Preferably, R is linear, i.e., R is (CH₂)ₙCH₃, where n is 3 to 17, preferably 4 to 11, and preferably 5 to 9. Optionally, R may contain one methyl or ethyl branch, i.e., R is (CH₂)ₘ[CH(CH₃)](CH₂)_{z}CH₃ or R is (CH₂)ₓ[CH(CH₂CH₃)](CH₂)_{y}CH₃, where (m + z) is 1 to 15, preferably 1 to 9, preferably 3 to 7, and (x + y) is 1 to 14, preferably 1 to 8, preferably 2 to 6. Preferably m > z; more preferably m is 0 to 15, more preferably 2 to 15, more preferably 3 to 12, more preferably 4 to 9; and n is 0 to 10, preferably 1 to 8, preferably 1 to 6, preferably 1 to 4. Preferably x > y; more preferably x is 0 to 14, more preferably 1 to 14, more preferably 2 to 11, more preferably 3 to 8; and y is 0 to 10, preferably 1 to 8, preferably 1 to 6, preferably 1 to 4. Preferably, the repeat units are arranged in a head-to-tail fashion with minimal heat-to-head connections.

The PAO may be atactic, isotactic, or syndiotactic. In one embodiment, the PAO has essentially the same population of meso and racemic dyads, on average, making it atactic. In another embodiment, the PAO has more than 50% (preferably more than 60%, preferably more than 70%, preferably more than 80%, preferably more than 90%) meso dyads (i.e., [m]) as measured by ¹³C-NMR. In another embodiment, the PAO has more than 50% (preferably more than 60%, preferably more than 70%, preferably more than 80%, preferably more than 90%) racemic dyads (i.e., [r]) as measured by ¹³C-NMR. In one embodiment, [m]/[r] determined by ¹³C-NMR is between 0.9 and 1.1 in one embodiment, [m]/[r] is greater than 1 in another embodiment, and [m]/[r] is less than 1 in yet another embodiment.

The PAO liquid may be comprised of one or more distinct PAO components. In one embodiment, the NFP is a blend of one or more PAOs with different compositions (e.g., different α-olefin(s) were used to make the oligomers) and/or different physical properties (e.g., kinematic viscosity, pour point, viscosity index, and/or glass transition temperature).

In another preferred embodiment, the PAO or blend of PAOs has a Viscosity Index of 120 or more (preferably 130 or more, preferably 140 or more, preferably 150 or more, preferably 170 or more, preferably 190 or more, preferably 200 or more, preferably 250 or more, preferably 300 or more). In another embodiment, the PAO or blend of PAOs has a viscosity Index of 120 to 350 (preferably 130 to 250).

In yet another preferred embodiment, the PAO or blend of PAOs has a pour point of -10°C or less (preferably -20°C or less, preferably -25°C or less, preferably -30°C or less, preferably -35°C or less, preferably -40°C or less, preferably -50°C or less). In another embodiment, the PAO or blend of PAOs has a pour point of -15° to-70°C (preferably -25° to -60°C).

In yet another preferred embodiment, the PAO or blend of PAOs has a glass transition temperature (T_{g}) of -40°C or less (preferably -50°C or less, preferably -60°C or less, preferably -70°C or less, preferably -80°C or less). In another embodiment, the PAO or blend of PAOs has a T_{g} of -50° to -120°C (preferably -60° to -100°C, preferably -70° to -90°C).

In yet another preferred embodiment, the PAO or blend of PAOs has a flash point of 200°C or more (preferably 210°C or more, preferably 220°C or more, preferably 225°C or more), preferably between 240°C and 290°C.

In yet another preferred embodiment, the PAO or blend of PAOs has a specific gravity (15.6/15.6°C) of 0.86 or less (preferably 0.855 or less, preferably 0.85 or less, preferably 0.84 or less).

In yet another preferred embodiment, the PAO or blend of PAOs has a Noack volatility of less than N* where N* = 60e^{-0.4(KV100°C)} with N* in units of % and KV100°C of the fluid in question in units of cSt.

In another embodiment, the PAO or blend of PAOs has a solubility parameter at 25°C of 8 or more (preferably 8 to 10) cal^{1/2}cm^{3/2}**.**

Preferred blends of PAOs include blends of two or more PAOs where the ratio of the highest KV100°C to the lowest KV100°C is at least 1.5 (preferably at least 2, preferably at least 3, preferably at least 5). Also preferred are blends of two or more PAOs wherein at least one PAO has a Noack volatility of less than N* as defined above; preferably all the PAOs in a blend have a Noack volatility of less than N*. In an additional embodiment, KV100°C of the PAOs are less than 300 cSt, preferably less than 150 cSt, preferably less than 100 cSt, preferably less than 40 cSt, preferably less than 25 cSt, preferably less than 10 cSt, preferably less than 8 cSt.

Preferred blends of PAO also include: blends of two or more PAOs where at least one PAO has a KV100°C of 40 cSt or more and at least one PAO has a KV100°C of less than 40 cSt (preferably 25 cSt or less, preferably 10 cSt or less, preferably 8 cSt or less); blends of two or more PAOs where at least one PAO has a KV100°C of 10 cSt or more and at least one PAO has a KV100°C of less than 10 cSt (preferably 8 cSt or less, preferably 6 cSt or less, preferably 4 cSt or less); blends of two or more PAOs where at least one PAO has a KV100°C of 8 cSt or more and at least one PAO has a KV100°C of less than 8 cSt (preferably 6 cSt or less, preferably 4 cSt or less); and blends of two or more PAOs where at least one PAO has a KV100°C of 6 cSt or more and at least one PAO has a KV100°C of less than 6 cSt (preferably 4 cSt or less).

Particularly preferred PAOs and blends of PAOs are those having A) a flash point of 200°C or more (preferably 210°C or more, preferably 220°C or more, preferably 225°C or more); and B) a pour point less than -20°C (preferably less than - 25°C, preferably less than -30°C, preferably less than -35°, preferably less than -40°C) and/or a kinematic viscosity at 100°C of 4 cSt or more (preferably 6 cSt or more, preferably 8 cSt or more, preferably 10 cSt or more).

Desirable PAOs are commercially available as SpectraSyn™ and SpectraSyn Ultra™ from ExxonMobil Chemical in Houston, Texas (previously sold under the SHF and SuperSyn™ tradenames by ExxonMobil Chemical Company), some of which are summarized in Table A. Other useful PAOs include those sold under the tradenames Synfluid™ available from ChevronPhillips Chemical Company (Pasedena, Texas), Durasyn™ available from Innovene (Chicago, Illinois), Nexbase™ available from Neste Oil (Keilaniemi, Finland), and Synton™ available from Chemtura Corporation (Middlebury, Connecticut). For PAOs, the percentage of carbons in chain-type paraffinic structures (C_{P}) is close to 100% (typically greater than 98% or even 99%).

**Table A. SpectraSyn™ Series Polyalphaolefins**

| | **KV @ 100°C, cSt** | **KV @ 40°C, cSt** | **VI** | **Pour Point, °C** | **Specific gravity** | **Flash Point, °C** | **APHA Color** |
|---|---|---|---|---|---|---|---|
| SpectraSyn 4 | 4 | 19 | 126 | -66 | 0.820 | 220 | 10 |
| SpectraSyn Plus 4 | 4 | 17 | 122 | -60 | 0.820 | 228 | 10 |
| SpectraSyn 6 | 6 | 31 | 138 | -57 | 0.827 | 246 | 10 |
| SpectraSyn Plus 6 | 6 | 30 | 140 | -54 | 0.827 | 246 | 10 |
| SpectraSyn 8 | 8 | 48 | 139 | -48 | 0.833 | 260 | 10 |
| SpectraSyn 10 | 10 | 66 | 137 | -48 | 0.835 | 266 | 10 |
| SpectraSyn 40 | 39 | 396 | 147 | -36 | 0.850 | 281 | 10 |
| SpectraSyn 100 | 100 | 1240 | 170 | -30 | 0.853 | 283 | 60 |
| SpectraSyn Ultra 150 | 150 | 1,500 | 218 | -33 | 0.850 | > 265 | 10 |
| SpectraSyn Ultra 300 | 300 | 3,100 | 241 | -27 | 0.852 | > 265 | 20 |
| SpectraSvn Ultra 1000 | 1,000 | 10,000 | 307 | -18 | 0.855 | > 265 | 30 |

In a preferred embodiment, the NFP comprises a GTL base stock or oil. GTL base stocks and oils are fluids of lubricating viscosity that are generally derived from waxy synthesized hydrocarbons, that are themselves derived via one or more synthesis, combination, transformation, and/or rearrangement processes from gaseous carbon-containing compounds and hydrogen-containing compounds as feedstocks, such as: hydrogen, carbon dioxide, carbon monoxide, water, methane, ethane, ethylene, acetylene, propane, propylene, propyne, butane, butylenes, and butynes. Preferably, the feedstock is syngas (synthesis gas, essentially CO and H₂) derived from a suitable source, such as natural gas, naphtha and/or coal. GTL base stocks and oils include wax isomerates, comprising, for example, hydroisomerized synthesized waxes, hydroisomerized Fischer-Tropsch (F-T) waxes (including waxy hydrocarbons and possible analogous oxygenates), or mixtures thereof. GTL base stocks and oils may further comprise other hydroisomerized base stocks and base oils. Particularly preferred GTL base stocks or oils are those comprising mostly hydroisomerized F-T waxes and/or other liquid hydrocarbons obtained by a F-T synthesis process.

The synthesis of hydrocarbons, including waxy hydrocarbons, by F-T may involve any suitable process known in the art, including those involving a slurry, a fixed-bed, or a fluidized-bed of catalyst particles in a hydrocarbon liquid. The catalyst may be an amorphous catalyst, for example based on a Group VIII metal such as Fe, Ni, Co, Ru, and Re on a suitable inorganic support material, or a crystalline catalyst, for example a zeolitic catalyst. The process of making a lubricant base stock or oil from a waxy stock is characterized as a hydrodewaxing process. A hydrotreating step, while typically not required for F-T waxes, can be performed prior to hydrodewaxing if desired. Some F-T waxes may benefit from removal of oxygenates while others may benefit from oxygenates treatment prior to hydrodewaxing. The hydrodewaxing process is typically conducted over a catalyst or combination of catalysts at high temperatures and pressures in the presence of hydrogen. The catalyst may be an amorphous catalyst, for example based on Co, Mo, W, etc. on a suitable oxide support material, or a crystalline catalyst, for example a zeolitic catalyst such as ZSM-23 and ZSM-48 and others disclosed in US patent 4,906,350, often used in conjuction with a Group VIII metal such as Pd or Pt. This process may be followed by a solvent and/or catalytic dewaxing step to lower the pour point of the hydroisomerate. Solvent dewaxing involves the physical fractionation of waxy components from the hydroisomerate. Catalytic dewaxing converts a portion of the hydroisomerate to lower boiling hydrocarbons; it often involves a shape-selective molecular sieve, such as a zeolite or silicoaluminophosphate material, in combination with a catalytic metal component, such as Pt, in a fixed-bed, fluidized-bed, or slurry type process at high temperatures and pressures in the presence of hydrogen.

Useful catalysts, processes, and compositions for GTL base stocks and oils, Fischer-Tropsch hydrocarbon derived base stocks and oils, and wax isomerate hydroisomerized base stocks and oils are described in, for example, US Patents 2,817,693; 4,542,122; 5,545,674; 4,568,663; 4,621,072; 4,663,305; 4,897,178; 4,900,407; 4,921,594; 4,923,588; 4,937,399; 4,975,177; 5,059,299; 5,158,671; 5,182,248; 5,200,382; 5,290,426; 5,516,740; 5,580,442; 5,885,438; 5,935,416; 5,935,417; 5,965,475; 5,976,351; 5,977,425; 6,025,305; 6,080,301; 6,090,989; 6,096,940; 6,103,099; 6,165,949; 6,190,532; 6,332,974; 6,375,830; 6,383,366; 6,475,960; 6,620,312; and 6,676,827; European Patents EP 324528, EP 532116, EP 532118, EP 537815, EP 583836, EP 666894, EP 668342, EP 776959; WIPO patent applications WO 97/31693, WO 99/20720, WO 99/45085, WO 02/64710, WO 02/64711, WO 02/70627, WO 02/70629, WO 03/33320; and British Patents 1,350,257; 1,390,359; 1,429,494; and 1,440,230. Particularly favorable processes are described in European Patent Applications EP 464546 and EP 464547. Processes using Fischer-Tropsch wax feeds are described in US 4,594,172; 4,943,672; 6,046,940; 6,103,099; 6,332,974; 6,375,830; and 6,475,960.

This invention also relates to flexibilized crosslinked polyethylene compositions comprising one or more polyethylene base resins crosslinked in the presence of one or more non-functionalized plasticizers, where one or more NFP's is a high purity hydrocarbon fluid derived from a GTL process comprising a mixture of paraffins of carbon number ranging from about C₂₀ to C₁₀₀, a molar ratio of isoparaffins:n-paraffins greater than about 50:1, the percentage of carbons in paraffinic structures (C_{P}) of 98% or more, a pour point ranging from about -20° to-60°C, and a kinematic viscosity at 100°C ranging from about 6 to 20 cSt.

As used herein, the following terms have the indicated meanings: "naphthenic" describes cyclic (mono-ring and/or multi-ring) saturated hydrocarbons (i.e., cycloparaffins) and branched cyclic saturated hydrocarbons; "aromatic" describes cyclic (mono-ring and/or multi-ring) unsaturated hydrocarbons and branched cyclic unsaturated hydrocarbons; "hydroisomerized" describes a catalytic process in which normal paraffins and/or slightly branched isoparaffins are converted by rearrangement into more branched isoparaffins (also known as "isodewaxing"); "wax" is a hydrocarbonaceous material existing as a solid at or near room temperature, with a melting point of 0°C or above, and consisting predominantly of paraffinic molecules, most of which are normal paraffins; "slack wax" is the wax recovered from petroleum oils such as by solvent dewaxing, and may be further hydrotreated to remove heteroatoms.

In another embodiment, the NFP comprises a Group III hydrocarbon oil (also called a Group III lubricant base stock or Group III mineral oil). Preferably the NFP has a saturates levels of 90% or more (preferably 92% or more, preferably 94% or more, preferably 95% or more, preferably 98% or more); and a sulfur content less than 0.03% (preferably between 0.001 and 0.01%); and a VI of 120 or more (preferably 130 or more). Preferably the Group III hydrocarbon oil has a kinematic viscosity at 100°C of 3 to 50, preferably 4 to 40 cSt, preferably 6 to 30 cSt, preferably 8 to 20; and/or a number average molecular weight of 300 to 5,000 g/mol, preferably 400 to 2,000 g/mol, more preferably 500 to 1,000 g/mol. Preferably the Group III hydrocarbon oil has a pour point of -10°C or less, a flash point of 200°C or more, and a specific gravity (15.6°C/15.6°C) of 0.86 or less.

Desirable Group III basestocks are commercially available from a number of sources and include those described in Table B. The percentage of carbons in chain-type paraffinic structures (C_{P}) in such liquids is greater than 80%.

**Table B. Commercially available Group III Basestocks**

| | **KV @ 100°C, cSt** | **VI** | **Pour Point, °C** | **Specific gravity** | **Flash Point, °C** |
|---|---|---|---|---|---|
| UCBO 4R¹ | 4.1 | 127 | -18 | 0.826 | 216 |
| UCBO 7R¹ | 7.0 | 135 | -18 | 0.839 | 250 |
| Nexbase 3043² | 4.3 | 124 | -18 | 0.831 | 224 |
| Nexbase 3050² | 5.1 | 126 | -15 | 0.835 | 240 |
| Nexbase 3060² | 6.0 | 128 | -15 | 0.838 | 240 |
| Nexbase 3080² | 8.0 | 128 | -15 | 0.843 | 260 |
| YubaseYU-4³ | 4.2 | 122 | -15 | 0.843 | 230 |
| YubaseYU-6³ | 6.5 | 131 | -15 | 0.842 | 240 |
| YubaseYU-8³ | 7.6 | 128 | -12 | 0.850 | 260 |
| Ultra-S4⁴ | 4.3 | 123 | -20 | 0.836 | 220 |
| Ultra-S6⁴ | 5.6 | 128 | -20 | 0.839 | 234 |
| Ultra-S8⁴ | 7.2 | 127 | -15 | 0.847 | 256 |
| VHVI4⁵ | 4.6 | 128 | -21 | 0.826 | |
| VHVI8⁵ | 8.0 | 127 | -12 | 0.850 | 248 |
| Visom4⁶ | 4.0 | | | | 210 |
| Visom6⁶ | 6.6 | 148 | -18 | 0.836 | 250 |

| | | | | | |
|---|---|---|---|---|---|
| 1 Available from ChevronTexaco (USA). 2 Available from Neste Oil (Finland). 3 Available from SK Corp (South Korea). 4 Available from ConocoPhillips (USA) / S-Oil (South Korea). 5 Available from PetroCanada (Canada). 6 Available from ExxonMobil (USA). | | | | | |

In preferred embodiments, the NFP has a kinematic viscosity at 100°C (KV₁₀₀) of 4 cSt or more, preferably 5 cSt or more, preferably 4 to 300 cSt, preferably 6 to 200 cSt, preferably 8 to 150 cSt.

In preferred embodiments, the NFP has a pour point of -10°C or less, preferably -20°C or less, preferably -30°C or less, preferably -40°C or less, preferably -45°C or less, preferably -50°C or less, preferably -10° to -100°C, preferably -15° to -80°C, preferably -15° to -75°C, preferably -20° to -70°C, preferably -25° to -65°C, preferably greater than -120°C, wherein a desirable range may be any combination of any lower pour point limit with any upper pour point limit described herein. In another embodiment, the NFP has a pour point of less than -30°C when the kinematic viscosity at 40°C is from 0.5 to 200 cSt. Most mineral oils, which typically include aromatic moieties and other functional groups, have a pour point of from 10° to -20°C in the same kinematic viscosity range.

In a preferred embodiment, the NFP has a glass transition temperature (T_{g}) of -40°C or less (preferably -50°C or less, preferably -60°C or less, preferably -70°C or less, preferably -80°C or less, preferably -45° to -120°C, preferably -65° to -95°C, wherein a desirable range may be any combination of any lower T_{g} limit with any upper T_{g} limit described herein.

In preferred embodiments, the NFP has a Viscosity Index (VI) of 90 or more, preferably 100 or more, preferably 110 or more, preferably 120 or more, preferably 130 or more, preferably 115 to 350, preferably 135 to 300, preferably 140 to 250, preferably 150 to 200, preferably 125 to 180, wherein a desirable range may be any combination of any lower VI limit with any upper VI limit described herein.

In preferred embodiments, the NFP has a flash point of 200°C or greater, preferably 210°C or greater, preferably 230°C or greater, preferably 200°C to 350°C, preferably 210°C to 300°C, preferably 215°C to 290°C, preferably 220°C to 280°C, preferably 225°C to 280°C, wherein a desirable range may be any combination of any lower flash point limit with any upper flash point limit described herein.

In preferred embodiments, the NFP has a specific gravity of 0.86 or less, preferably 0.855 or less, preferably 0.84 or less, preferably 0.78 to 0.86, preferably 0.79 to 0.855, preferably 0.80 to 0.85, preferably 0.81 to 0.845, preferably 0.82 to 0.84, wherein a desirable range may be any combination of any lower specific gravity limit with any upper specific gravity limit described herein.

In preferred embodiments, the NFP has an Mn of 250 g/mol or more, preferably 300 g/mol or more, preferably 400 g/mol or more, preferably 500 g/mol or more, preferably 300 to 21,000 g/mol, preferably 300 to 10,000 g/mol, preferably 400 to 5,000 g/mol, preferably 450 to 3,000 g/mol.

In preferred embodiments, the NFP has a low degree of color, such as typically identified as "water white," "prime white," "standard white," or "bright and clear," preferably an APHA color of 100 or less, preferably 80 or less, preferably 60 or less, preferably 40 or less, preferably 20 or less, as determined by ASTM D1209.

In other embodiments, any NFP may have an initial boiling point (ASTM D1160) of from 300 to 600°C in one embodiment, and from 350° to 500°C in another embodiment, and greater than 400°C in yet another embodiment.

Any of the NFP's for use in the present invention may be described by any embodiment described herein, or any combination of the embodiments described herein. For example, in one embodiment, the NFP is a C₆ to C₂₀₀ paraffin having a pour point of less than -25°C. Alternately, the NFP comprises an aliphatic hydrocarbon having a kinematic viscosity of from 0.1 to 1000 cSt at 100°C. Alternately, the NFP is selected from isoparaffins and PAOs and blends thereof having from 8 to 25 carbon atoms.

In another embodiment, the NFP of the present invention comprises C₂₅ to C₁₅₀₀ paraffins, and C₃₀ to C₅₀₀ paraffins in another embodiment, and has a flash point of 200°C or more and a pour point of -10°C or less and a viscosity index of 120 or more. Alternately the NFP comprises C₂₅ to C₁₅₀₀ paraffins, preferably C₃₀ to C₅₀₀ paraffins, and has a flash point of 200°C or more and a pour point of -20°C or less. Alternately the NFP comprises C₂₅ to C₁₅₀₀ paraffins, preferably C₃₀ to C₅₀₀ paraffins, and has a flash point of 200°C or more and a kinematic viscosity at 100°C of 35 cSt or more. In another embodiment, the NFP consists essentially of C₃₅ to C₃₀₀ paraffins, preferably the NFP consists essentially of C₄₀ to C₂₅₀ paraffins, and has a flash point of 200°C or more and a pour point of -10°C or less and a viscosity index of 120 or more. Alternately the NFP consists essentially of C₃₅ to C₃₀₀ paraffins, preferably C₄₀ to C₂₅₀ paraffins, and has a flash point of 200°C or more and a pour point of -20°C or less. Alternately the NFP consists essentially of C₃₅ to C₃₀₀ paraffins, preferably C₄₀ to C₂₅₀ paraffins, and has a flash point of 200°C or more and a kinematic viscosity at 100°C of 35 cSt or more. Alternately the NFP has a flash point of 200°C or more and a pour point of -20°C or less. Alternately the NFP has a flash point of 200°C or more and a kinematic viscosity at 100°C of 35 cSt or more.

In a preferred embodiment, any NFP described herein has a flash point of 200°C or more (preferably 210°C or more) and a pour point of -20°C or less (preferably -25°C or less, more preferably -30°C or less, more preferably -35°C or less, more preferably -45°C or less, more preferably -50°C or less).

In another preferred embodiment, the NFP has a flash point of 220°C or more (preferably 230°C or more) and a pour point of -10°C or less (preferably -25°C or less, more preferably -30°C or less, more preferably -35°C or less, more preferably -45°C or less, more preferably -50°C or less).

In another preferred embodiment, the NFP has a kinematic viscosity at 100°C of 4 cSt or more (preferably 6 cSt or more, preferably 8 cSt or more) and a specific gravity (15.6/15.6°C) of 0.87 or less (preferably 0.865 or less, preferably 0.86 or less, preferably 0.855 or less) and a flash point of 200°C or more (preferably 225°C or more).

In another preferred embodiment, the NFP has a) a flash point of 200°C or more, b) a specific gravity of 0.86 or less, and c1) a pour point of -10°C or less and a viscosity index of 120 or more, or c2) a pour point of -20°C or less, or c3) a kinematic viscosity at 100°C of 4 cSt or more.

In another preferred embodiment, the NFP has a specific gravity (15.6/15.6°C) of 0.85 or less (preferably between 0.80 and 0.85) and a kinematic viscosity at 100°C of 3 cSt or more (preferably 4 or more, preferably 5 cSt or more, preferably 8 cSt or more) and/or a number-average molecular weight (Mₙ) of at least 280 g/mol.

In another preferred embodiment, the NFP has a specific gravity (15.6/15.6°C) of 0.86 or less (preferably between 0.81 and 0.855, preferably between 0.82 and 0.85) and a kinematic viscosity at 100°C of 4 cSt or more (preferably 6 or more, preferably 8 cSt or more) and/or a number-average molecular weight (Mₙ) of at least 420 g/mol.

In another preferred embodiment, the NFP has a pour point of -25°C or less, preferably between -30°C and -90°C, and a kinematic viscosity in the range of from 20 to 5000 cSt at 40°C. In another preferred embodiment, the NFP has a pour point of -25°C or less and a Mn of 400 g/mol or greater. Most mineral oils, which typically include functional groups, have a pour point of from 10°C to -25°C at the same viscosity and molecular weight ranges.

In another preferred embodiment the NFP has a glass transition temperature (T_{g}) that cannot be determined by ASTM E 1356 or, if it can be determined, then the T_{g} according to ASTM E 1356 is less than 0°C, preferably less than -10°C, more preferably less than -20°C, more preferably less than -30°C, more preferably less than -40°C, and, preferably, also has one or more of the following properties: (1) an initial boiling point as determined by ASTM D 1160 greater than 300°C, preferably greater than 350°C, preferably greater than 400°C; and/or (2) a pour point of -10°C, or less, preferably -15°C or less, preferably -25°C or less, preferably -35°C or less, preferably -45°C or less; and/or (3) a specific gravity (ASTM D 4052, 15.6/15.6°C) of less than 0.88, preferably less than 0.86, preferably less than 0.84, preferably from 0.80 to 0.88, preferably from 0.82 to 0.86; and/or (4) a final boiling point as determined by ASTM D1160 of from 300°C to 800°C, preferably from 400°C to 700°C, preferably greater than 500°C; and/or (5) an Mw between 30,000 and 400 g/mol preferably between 15,000 and 450 g/mol; and/or (6) an Mn between 10,000 and 400 g/mol, preferably between 5,000 and 450 g/mol; and/or (7) a flash point as measured by ASTM D 92 of 200°C or greater.

In a preferred embodiment, the percentage of carbons in chain-type paraffins (C_{P}) for any NFP is at least 80% (preferably at least 85%, more preferably at least 90%, even more preferably at least 95%, even more preferably at least 98%, most preferably at least 99%).

Preferred compositions of the present invention can be characterized in that the crosslinked polyethylene composition decreases less than 3% (preferably less than 2%, preferably less than 1%) in weight when permanence of the NFP is determined by ASTM D1203 (0.25 mm thick sheet, 300 hours in dry 70°C oven). Weight loss here refers to the reduction in weight in excess of that measured for the unplasticized composition under the same test conditions.

Preferred NFP's of this invention are characterized in that, when blended with the polyethylene base resin to form a plasticized composition prior to crosslinking the polyethylene, the NFP is miscible with the polyethylene as indicated by no change in the number of tan-delta peaks in the Dynamic Mechanical Thermal Analysis (DMTA) trace as compared to the unplasticized polyolefin DMTA trace (the "trace" is the plot of tan-delta vs. temperature). Lack of miscibility is indicated by an increase in the number of tan-delta peaks in DMTA trace over those in the unplasticized polyolefin.

In one embodiment of the invention, the NFP can comprise a blend of two or more of the NFP species described herein. By selectively combining two or more NFP modifiers with different attributes, it is possible to obtain benefit from each of them. For example, a combination of a relatively low Mw NFP and a relatively high Mw modifier may provide improved permanence while at the same time maintaining improved flexibility. For another example, a combination of low pour point NFP and a high Mw NFP may provide improved permanence while at the same time maintaining sufficient low temperature impact properties. Those skilled in the art will appreciate that the inventive modifiers with higher viscosities and ones with better compatibility with the host polymer generally exhibit better permanence and retention of properties, while the modifiers with lower viscosities generally exhibit better processing ease, better flexibility and better low temperature impact properties when compounded in a PEX.

The polyethylene base resins suitable for use in the present invention can be in any physical form when used to blend with the modifier of the invention for crosslinking. In one embodiment, reactor granules, defined as the granules of polymer that are isolated from the polymerization reactor prior to any processing procedures, are used to blend with the modifier of the invention. The reactor granules typically have an average diameter of from 50 µm to 10 mm in one embodiment, and from 10 µm to 5 mm in another embodiment. In another embodiment, the base resin is in the form of pellets, such as, for example, having an average diameter of from 1 mm to 10 mm that are formed from melt extrusion of the reactor granules or the polymerization reactor effluent.

The polyethylene base resins, modifiers and other components blended for crosslinking in the present invention can be blended by any suitable means, and are typically blended to yield an intimately mixed composition which may be a homogeneous, single phase mixture. For example, they may be blended in a static mixer, batch mixer, extruder, or a combination thereof, which is sufficient to achieve an adequate dispersion of modifier in the base resin.

The mixing step may involve first dry blending using, for example, a tumble blender, where the base resin and modifier are brought into contact first, without intimate mixing, which may then be followed by melt blending in an extruder and crosslinking. Another method of blending the components is to melt blend the base resin pellets with the modifier directly in an extruder or batch mixer. It may also involve a master batch approach, where the final modifier concentration is achieved by combining neat polymer with an appropriate amount of plasticized polymer that had been previously prepared at a higher modifier concentration. The mixing step may take place as part of a processing method used to crosslink the blend and fabricate articles, such as in the extruder or an injection molding machine in a polyethylene processing and/or crosslinking line.

In one aspect of the invention, the ethylene polymer and modifier are melt blended in an apparatus such as an extruder, such as a single or twin screw extruder, or batch mixer. The ethylene polymer may also be dry blended with the modifier using a tumbler, double-cone blender, ribbon blender, or other suitable blender. In yet another embodiment, the ethylene polymer and modifier are blended by a combination of approaches, for example a tumbler followed by an extruder. A preferred method of blending is to include the final stage of blending in a continuous gravimetric blender just prior to the introduction into the extruder used to melt and convey the composition for cure system mixing, grafting and/or crosslinking. Alternatively or additionally, in an embodiment blending can include direct injection of the modifier into the extruder or injection molding machine, either before or after the polyethylene is fully melted.

The type of single screw used in an extruder can make a difference in how well the composition is mixed and the rate the at which the composition can be made. Although any single screw could be used under some conditions, in some embodiments certain screws are better at mixing fluids and solid polymers. Screw designs for the composition of the invention can vary depending upon the materials being processed and the amount of pre-mixing that has taken place prior to extrusion. Preferably, the screw geometry includes good solids conveying coupled with optimized mixing elements to provide good homogenization. Both distributive and dispersive mixing elements can be used to provide the uniform output required. One example of preferred mixing screw geometry includes a barrier flight screw, often referred to in the art as a "Maillefer" screw. This screw design can be combined with other mixing elements if additional mixing is required. Designs can be optimized for both smooth and grooved bore barrels. In one embodiment, single screws with Madox mixing sections or Madox and Barrier mixing sections can be used. Conventional screw extruders can be used in a peroxide crosslinking process available under the trade designation PEXLINK from iNOEX GmbH, in which the extrudate from a conventional screw extruder, rather than a ram extruder, is crosslinked downstream by infrared radiation at line speeds of up to 30 m/min. Extrusion technology for polyethylene is described in more detail in, for example, PLASTICS EXTRUSION TECHNOLOGY 26-37 (Friedhelm Hensen, ed. Hanser Publishers 1988).

In another aspect of the invention, the polyethylene base resin may be blended in solution by any suitable means, by using a solvent that dissolves both components to a significant extent. The blending may occur at any temperature or pressure where the modifier and the ethylene polymer base resin remain in solution. Preferred conditions include blending at high temperatures, such as 10°C or more, preferably 20°C or more over the melting point of the ethylene polymer. Such solution blending would be particularly useful in processes where the ethylene polymer is made by solution process and the modifier is added directly to the polymerization reactor or to the finishing train, rather than added to the dry polymer in another blending step altogether. Such solution blending would also be particularly useful in processes where the ethylene polymer is made in a bulk or high pressure process where the both the polymer and the modifier were soluble in the monomer. As with the solution process the modifier is added directly to the finishing train, rather than added to the dry polymer in another blending step altogether.

Thus, in the cases of polyethylene crosslinking and the fabrication of crosslinked polyethylene articles using methods that involve an injection molding machine or an extruder, such as one step or two step moisture curing processes, peroxide crosslinking, and e-beam crosslinking, any means of combining the polyethylene and modifier to achieve the desired blends for crosslinking serve equally well as fully formulated pre-blended pellets, since the forming process includes a re-melting and mixing of the raw material; example combinations include simple blends of neat polymer pellets and modifier, of neat polymer granules and modifier, of neat polymer pellets and pre-blended pellets, and neat polymer granules and pre-blended pellets. Here, "pre-blended pellets" means pellets of a polyethylene composition comprising ethylene polymer and modifier at some concentration.

In the process of compression molding, however, little mixing of the melt components occurs, and pre-blended pellets would be preferred over simple blends of the constituent pellets (or granules) and modifier. Those skilled in the art will be able to determine the appropriate procedure for blending of the polymers to balance the need for intimate mixing of the component ingredients with the desire for process economy.

In the present invention polyethylene is crosslinked according to one of several polyethylene crosslinking techniques and on equipment well known to those skilled in the art. In embodiments, polyethylene is crosslinked in the presence of NFP using peroxides, moisture curing systems, irradiation or the like. Peroxide crosslinking uses an organic peroxide to initiate a free radical reaction in the polymer and the resulting free radicals abstract hydrogen ions from the polymer chains, enabling them to form covalent bonds between the chains. Crosslinking preferably occurs in the presence of a free-radical initiator selected from the group consisting of organic peroxides, organic peresters, and azo compounds. Examples of such compounds include benzoyl peroxide, dichlorobenzoyl peroxide, dicumyl peroxide, di-tert-butyl peroxide, 2,5-dimethyl-2,5-di(peroxybenzoate)hexyne-3, 1,4-bis(tert-butylperoxyisopropyl)benzene, lauroyl peroxide, tert-butyl peracetate, 2,5-dimethyl-2,5-di(tert-butylperoxy)hexyne-3, 2,5-dimethyl-2,5-di(tert-butylperoxy)hexane, tert-butyl perbenzoate, tert-butylperphenyl acetate, tert-butyl perisobutyrate, tert-butyl per-sec-octoate, tert-butyl perpivalate, cumyl perpivalate and tert-butyl perdiethylacetate, azoisobutyronitrile, dimethyl azoisobutyrate. Suitable organic peroxides for crosslinking the polyethylene/NFP blends according to the present invention are available commercially under the trade designation LUPEROX, (preferably 2,5-dimethy-2,5-di(tert-butylperoxy)hexane , sold under the tradename LUPEROX^{®} 101).

The peroxide is typically melt compounded into the polyethylene at temperatures below the decomposition point of the peroxide, and after the final product is formed, the temperature is increased to initiate the crosslinking reaction. In a wire extrusion embodiment, post-extrusion curing can be achieved by a continuous vulcanization process wherein wire exiting the die goes into a high-pressure steam tube which may be 100 meters long or more where the insulation is cured on the wire by the heat supplied from the steam. In a pipe extrusion embodiment, the Engel method can be used wherein the peroxide is melt compounded cold into the polyethylene blend and the blend is then rammed through a high pressure, high temperature head to exit as a cross-linked pipe. Peroxide crosslinking achieves relatively high crosslinking densities with low raw material costs, but requires relatively expensive equipment, has relatively slow production rates and is energy intensive.

Irradiation crosslinking uses ionizing radiation such as from a high-energy electron accelerator. The polyethylene/NFP blend, which may include additives to accelerate the crosslinking process, is made using conventional thermoplastic processing equipment at relatively high speeds, finished into its desired shape, and then cured off-line by exposing it to the electron beam. In an embodiment, the tubular product can be taken up on a large coil or reel of the pipe or jacketed wire or cable, and rewound through the electron beam unit. Depending on the thickness of the wall of the tubular, it may be necessary for repeated runs through the electron beam unit to obtain the desired crosslinking density.

In moisture cure embodiments, a copolymer of ethylene and vinyl silane reacts with water, usually in the presence of a catalyst, to effect crosslinking. The product is made on conventional thermoplastic processing equipment and then cured off-line by exposing it to moisture. The cure rate depends on moisture level, temperature and wall thickness, and can be accelerated by contact with low-pressure steam or hot water, but crosslinking under ambient conditions may also be possible.

The polyethylene copolymers are capable of being crosslinked by a reactive unsaturated silane compound. Silane crosslinking processes well-known in the art include the commercially available MONOSIL process developed by Maillefer and BICC, and the SIOPLAS process developed by Dow Corning. In the SIOPLAS, or two-step process, a polyethylene is first graft-modified in a compounding mixer or extruder with a reactive silane compound and a free radical initiator, such as dicumyl peroxide, for example, to produce a silane-grafted polyethylene that can be pelletized and shipped or stored for subsequent processing. The silane-grafted polyethylene is then compounded with a silanol condensation catalyst and melt-extruded in the desired form, such as a pipe or a wire coating layer, followed by curing (crosslinking) by heat and moisture, such as in a water bath or a steam bath. In warm and humid climates, curing can take place under ambient conditions. Polyethylene crosslinking compounding materials are available from a number of manufacturers who supply silane pre-grafted base resins and catalyst masterbatches that can be mixed in the proper proportions, e.g. 95/5 or 50/50 by weight grafted PE resin/catalyst masterbatch, to produce a material curable by exposure to steam at 70°C - 90°C or ambient moisture. For example, SIOPLAS PEX system components are available from Padanaplast USA under the trade designation PEXIDAN® (PEXIDAN® V/T, PEXIDAN® X/T, PEXIDAN® U/T, PEXIDAN®, R/T, PEXIDAN® H/T, PEXIDAN® L/T) that include a silane pregraft (designated A-1001) and a catalyst masterbatch (designated CAT-010FR, CAT-005FR, CAT-008, CAT-009, CAT-012FR, CAT-003, respectively). Other SIOPLAS PEX system suppliers include AEI Compounds Ltd. (SX704 silane pregraft PE and CM488 catalyst masterbatch); Silon Compounds Ltd. (TA1108 HD silane pregraft PE and TA 2125 HD catalyst masterbatch).

In the MONOSIL or one-step process, the polyethylene, reactive silane compound, free radical initiator and silanol condensation catalyst are all fed into an extruder and melt extruded in a desired form, such as a pipe or a wire coating layer, followed by curing by heat and moisture, as in the two-step process.

The reactive silane compound can be an unsaturated silane compound having one or more hydrolyzable groups. Typical reactive silane compounds include an alkenyl group such as vinyl, allyl, isopropenyl, butenyl, cyclohexenyl, or γ-(meth)acryloxy allyl, and a hydrolyzable group such as a hydrocarbyloxy, hydrocarbonyloxy or hydrocarbylamino group. Specific examples of hydrolyzable groups include methoxy, ethoxy, formyloxy, acetoxy, propionyloxy, and alkylamino or acrylamino groups.

A suitable reactive silane is vinyl trimethoxysilane, available as SILQUEST® from OSi Specialties or DYNASYLAN VTMO available from Hüls. Other silane compound suppliers include Momentive Performance Materials (formerly GE Silicons/OSi Witco) (SILCAT R and XL-PEARL 60); Wacker Chemie (XL 11 VP); Silon Compounds Ltd. (SILMIX). The amount of silane used is readily determined by one skilled in the art, based on the processing conditions, the specific silane used, and other well known factors. Typical amounts of silane compound are from about 0.5 to about 5 phr, where the units "phr" denote parts by weight per hundred parts by weight of the polyethylene resin.

The free radical initiator can be a peroxide or azo compound which decomposes to form peroxyl or azyl radicals at temperatures suitable for polyethylene pelletization, or can be ionizing radiation. Typical peroxides include, for example, dicumyl peroxide, di-tert-butyl peroxide, t-butyl perbenzoate, benzoyl peroxide, cumene hydroperoxide, t-butyl peroctoate, methyl ethyl ketone peroxide, 2,5-dimethyl-2,5-di(t-butyl peroxy)hexane, lauryl peroxide and tert-butyl peracetate. A suitable azo compound is azobisisobutyl nitrite. A particular peroxide compound is dicumyl peroxide, available commercially as DICUP®R from Hercules. The amount of free radical initiator is readily determined by one skilled in the art, and is typically from about 0.04 to about 0.15 phr. Some suppliers provide the reactive silane compound containing a proportioned amount of peroxide, for example, blends of vinyltrimethoxysilane with peroxide, and/or with antioxidants and copper stabilizers, are available under the DYNASYLAN SILFIN trade designations

The silanol condensation catalyst can be any compound that promotes the condensation crosslinking reaction, such as organic bases, carboxylic acids, and organometallic compounds including organic titanates and complexes or carboxylates of lead, cobalt, iron, nickel, zinc or tin. Specific catalysts include, for example, dibutyl tin dilaurate, dioctyl tin maleate, dibutyl tin diacetate, dibutyl tin dioctoate, dibutyl tin didodecanoate, stannous acetate, stannous octoate, lead naphthenate, zinc caprylate, and cobalt naphthenate. A particular tin carboxylate is dibutyl tin didodecanoate, available commercially as STANCLERE®TL from Akzo Chemie. The catalyst is used in a catalytically effective amount, readily determined by one skilled in the art. Typical catalyst amounts are from about 0.01 to about 0.1 phr.

The peroxide-initiated reaction of vinyl trimethoxysilane and polyethylene yields a grafted polymer having a polyethylene backbone structure with pendant ethyltrimethoxysilyl moieties. In the crosslinking reaction, methoxy groups are hydrolyzed to form methanol and pendant ethyldimethoxysilanolyl groups, which undergo condensation reactions with other ethyldimethoxysilanolyl groups to eliminate water and form an Si-O-Si linkage between the pendant silyl moieties.

One or more crosslinking agents are preferably used in the compositions, especially when silica is the primary filler, or is present in combination with another filler. More preferably, the crosslinking/coupling agent may be a bifunctional organosilane crosslinking agent. An "organosilane crosslinking agent" is any silane coupled filler and/or crosslinking activator and/or silane reinforcing agent known to those skilled in the art including, but not limited to, vinyl triethoxysilane, vinyl-tris-(beta-methoxyethoxy)silane, methacryloylpropyltrimethoxysilane, gamma-aminopropyl triethoxysilane (sold commercially as A1100 by Witco), gamma-mercaptopropyltrimethoxysilane (A189 by Witco) and the like, and mixtures thereof. In one embodiment, bis-(3-triethoxysilypropyl)tetrasulfide (sold commercially as Si69 by Degussa) is employed. Sigma Aldrich, Aceto Corp, Kenrich Petrochemicals, Inc., Witco all sell silane coupling/crosslinking agents.

In the one-step MONOSIL process, the grafting, mixing and finished product extrusion can be simultaneous, e.g. polyethylene resin can be fed into the extruder and a solution of silane, initiator and catalyst can be injected, soaked or added through gravimetric dosing systems into the barrel. Alternately, the silane, initiator and catalyst can be absorbed into a porous or amorphous polyethylene resin used as a masterbatch, for example DRY-SIL. Porous polyethylene pellets can also be used to absorb the silane in-line, so that a dry blend is introduced to the extruder, e.g. SPHERSIL P material in the SPHERSIL PROCESS from Silon Compounds. The grafting reaction occurs during the extrusion and the material is coated onto wire or cable as it exits the die, or extruded into a pipe or tube. The one-step process can require a different screw design, commonly with a length to diameter ratio from 24 to 30, and a longer extruder than required in the peroxide or two-step moisture curing process. Care must also be exercised in the selection of stabilizers, antioxidants, flame retardants and other additives so that they will not interfere with the grafting reaction.

In one embodiment of the present invention, conventional plasticizers such as are commonly used for poly(vinyl chloride) are substantially absent from the crosslinked polyethylene compositions. In particular, plasticizers such as phthalates, adipates, trimellitate esters, polyesters, and other functionalized plasticizers as disclosed in, for example, US 3,318,835; US 4,409,345; WO 02/31044 A1; and PLASTICS ADDITIVES 499-504 (Geoffrey Pritchard, ed., Chapman & Hall 1998) are substantially absent. By "substantially absent," it is meant that these compounds are not added deliberately to the compositions and if present at all, are present at less than 0.5 wt %.

In some embodiments, naphthenic mineral oils and aromatic mineral oils are substantially absent; i.e., present at less than 0.5 wt % of the inventive composition. In another embodiment, if such oils are present in the composition, the aggregate of such oils is at most 5 wt % of the total liquid modifier in the composition. Also, aromatic moieties and carbon-carbon unsaturation are substantially absent from the modifiers used in the present invention in yet another embodiment. Aromatic moieties include a compound whose molecules have the ring structure characteristic of benzene, naphthalene, phenanthrene, anthracene, etc. By "substantially absent," it is meant that these aromatic compounds or moieties are not added deliberately to the compositions, and if present, are present to less than 0.5 wt % of the composition.

The crosslinked polyethylene compositions of the present invention may also contain other additives. Those additives include antioxidants, nucleating agents, acid scavengers, stabilizers, anticorrosion agents, blowing agents, other UV absorbers such as chain-breaking antioxidants, etc., quenchers, antistatic agents, slip agents, pigments, dyes and fillers and cure agents such as peroxides and silanes mentioned above. Dyes and other colorants common in the industry may be present from 0.01 to 10 wt % in one embodiment, and from 0.1 to 6 wt % in another embodiment, based upon the weight of the composition.

In particular, antioxidants and stabilizers such as organic phosphites, hindered amines, and phenolic antioxidants may be present in the crosslinked polyethylene compositions of the invention from 0.001 to 2 wt %, based upon the weight of the composition, in one embodiment, and from 0.01 to 0.8 wt % in another embodiment, and from 0.02 to 0.5 wt % in yet another embodiment. Non-limiting examples of organic phosphites that are suitable are tris(2,4-di-tert-butylphenyl)phosphite (IRGAFOS 168) and di(2,4-di-tert-butylphenyl)pentaerythritol diphosphite (ULTRANOX 626). Non-limiting examples of hindered amines include poly[2-N,N'-di(2,2,6,6-tetramethyl-4-piperidinyl)-hexanediamine-4-(1-amino-1,1,3,3-tetramethylbutane)sym-triazine] (CHIMASORB 944); bis(1,2,2,6,6-pentamethyl-4-piperidyl)sebacate (TINUVIN 770). Non-limiting examples of phenolic antioxidants include pentaerythrityl tetrakis(3,5-di-tert-butyl-4-hydroxyphenyl) propionate (IRGANOX 1010); and 1,3,5-tri(3,5-di-tert-butyl-4-hydroxybenzyl-isocyanurate (IRGANOX 3114).

Fillers may be present from 0.001 to 50 wt % in one embodiment, and from 0.01 to 25 wt %, based upon the weight of the composition, in another embodiment, and from 0.2 to 10 wt % in yet another embodiment. Desirable fillers include but are not limited to titanium dioxide, silicon carbide, silica (and other oxides of silica, precipitated or not), antimony oxide, lead carbonate, zinc white, lithopone, zircon, corundum, spinel, apatite, Barytes powder, barium sulfate, magnesite, carbon black, dolomite, calcium carbonate, talc and hydrotalcite compounds of the ions Mg, Ca, or Zn with Al, Cr or Fe and CO₃ and/or HPO₄, hydrated or not; quartz powder, hydrochloric magnesium carbonate, glass fibers, clays, alumina, and other metal oxides and carbonates, metal hydroxides, chrome, phosphorous and brominated flame retardants, antimony trioxide, silica, silicone, and blends thereof. These fillers may particularly include any other fillers and porous fillers and supports known in the art, and may have the modifier of the invention pre-contacted, or pre-absorbed into the filler prior to addition to the ethylene polymer in one embodiment.

More particularly, in one embodiment of the present invention, the modifier, or some portion of the modifier, may be blended with a filler, desirably a porous filler. The modifier and filler may be blended by, for example, a tumbler or other wet blending apparatus. The modifier and filler in this embodiment are blended for a time suitable to form a homogenous composition of modifier and filler, desirably from 1 minute to 5 hours in one embodiment. This modifier/filler blend may then be blended with the ethylene polymer base resin useful in the invention for plasticization of the ethylene polymer base resin and flexibilization of the crosslinked polyethylene. In another embodiment, a porous filler may be contacted with the modifier, or some portion thereof, prior to contacting the filler with the ethylene polymer base resin. In another embodiment, the porous filler, ethylene polymer and modifier are contacted simultaneously (or in the same blending apparatus). In any case, the filler may be present from 0.1 to 60 wt % of the composition, and from 0.2 to 40 wt % in another embodiment, and from 0.3 to 20 wt % in yet another embodiment.

Metal salts of fatty acids may also be present in the crosslinked polyethylene compositions of the present invention. Such salts may be present from 0.001 to 1 wt % of the composition in one embodiment, and from 0.01 to 0.8 wt % in another embodiment. Examples of fatty acids include lauric acid, stearic acid, succinic acid, stearyl lactic acid, lactic acid, phthalic acid, benzoic acid, hydroxystearic acid, ricinoleic acid, naphthenic acid, oleic acid, palmitic acid, erucic acid, or any monocarboxylic aliphatic saturated or unsaturated acid having a chain length of 7 to 22 carbon atoms. Suitable metals including Li, Na, Mg, Ca, Sr, Ba, Zn, Cd, Al, Sn, Pb and so forth. Preferable metal salts of fatty acids are magnesium stearate, calcium stearate, sodium stearate, zinc stearate, calcium oleate, zinc oleate, and magnesium oleate.

In a preferred embodiment, slip additives may be present in the compositions of this invention. Preferably the slip additives are present at 0.001 to 1 wt % (10 to 10,000 ppm), more preferably 0.01 to 0.5 wt % (100 to 5000 ppm), more preferably 0.1 to 0.3 wt % (1000 to 3000 ppm), based upon the weight of the composition.

Desirable slip additives include but are not limited to saturated fatty acid amides (such as palmitamide, stearamide, arachidamide, behenamide, stearyl stearamide, palmityl palmitamide, and stearyl arachidamide); saturated ethylene-bis-amides (such as stearamido-ethyl-stearamide, stearamido-ethyl-palmitamide, and palmitamido-ethyl-stearamide); unsaturated fatty acid amides (such as oleamide, erucamide, and linoleamide); unsaturated ethylene-bis-amides (such as ethylene-bis-stearamide, ethylene-bis-oleamide, stearyl-erucamide, erucamido-ethyl-erucamide, oleamido-ethyl-oleamide, erucamido-ethyl-oleamide, oleamido-ethyl-erucamide, stearamido-ethyl-erucamide, erucamido-ethyl-palmitamide, and palmitamido-ethyl-oleamide); glycols; polyether polyols (such as Carbowax); acids of aliphatic hydrocarbons (such as adipic acid and sebacic acid); esters of aromatic or aliphatic hydrocarbons (such as glycerol monostearate and pentaerythritol monooleate); styrene-alpha-methyl styrene; fluoro-containing polymers (such as polytetrafluoroethylene, fluorine oils, and fluorine waxes); silicon compounds (such as silanes and silicone polymers, including silicone oils, modified silicones and cured silicones); sodium alkylsulfates, alkyl phosphoric acid esters; and mixtures thereof.

Preferred slip additives are unsaturated fatty acid amides, which are commercially available from Crompton (KEKAMIDE™ grades), Croda Universal (CRODAMIDE™ grades), and Akzo Nobel Amides Co. Ltd. (ARMOSLIP™ grades). Particularly preferred slip agents include unsaturated fatty acid amides having the chemical structure CH₃(CH₂)₇CH=CH(CH₂)ₓCONH₂ where x is 5 to 15. Preferred versions include: 1) Erucamide, where x is 11, also referred to as cis-13-docosenoamide (commercially available as ARMOSLIP E); 2) Oleylamide, where x is 8; and 3) Oleamide, where x is 7, also referred to as N-9-octadecenyl-hexadecanamide. In another embodiment, stearamide is also useful in this invention. Other preferred slip additives include those described in WO 2004/005601A1.

In some embodiments the polyethylene base resins used for crosslinking according to this invention may be blended with one or more other polymers, including but not limited to, thermoplastic polymer(s) and/or elastomer(s).

By thermoplastic polymer(s) is meant a polymer that can be melted by heat and then cooled without appreciable change in solid-state properties before and after heating. Thermoplastic polymers typically include, but are not limited to, polyolefins, polyamides, polyesters, polycarbonates, polysulfones, polyacetals, polylactones, acrylonitrile-butadiene-styrene resins, polyphenylene oxide, polyphenylene sulfide, styrene-acrylonitrile resins, styrene maleic anhydride, polyimides, aromatic polyketones, or mixtures of two or more of the above. Preferred polyolefins include, but are not limited to, polymers comprising one or more linear, branched or cyclic C₂ to C₄₀ olefins, preferably polymers comprising ethylene copolymerized with one or more C₃ to C₄₀ olefins, preferably a C₃ to C₂₀ alpha olefin, more preferably C₃ to C₁₀ alpha-olefins. A particularly preferred example is polybutene. The most preferred polyolefin is polypropylene. Other preferred polyolefins include, but are not limited to, polymers comprising ethylene including but not limited to ethylene copolymerized with a C₃ to C₄₀ olefin, preferably a C₃ to C₂₀ alpha olefin, more preferably propylene, butene, hexene, and/or octene.

By elastomers is meant all natural and synthetic rubbers, including those defined in ASTM D1566. Examples of preferred elastomers include, but are not limited to, ethylene propylene rubber, ethylene propylene diene monomer rubber, styrenic block copolymer rubbers (including SEBS, SI, SIS, SB, SBS, SIBS and the like, where S = styrene, EB = random ethylene + butene, I = isoprene, and B = butadiene), butyl rubber, halobutyl rubber, copolymers of isobutylene and para-alkylstyrene, halogenated copolymers of isobutylene and para-alkylstyrene, natural rubber, polyisoprene, copolymers of butadiene with acrylonitrile, polychloroprene, alkyl acrylate rubber, chlorinated isoprene rubber, acrylonitrile chlorinated isoprene rubber, polybutadiene rubber (both cis and trans).

In another embodiment, the blend comprising the modifier which is crosslinked according to the present invention may further be combined with one or more polymers polymerizable by a high-pressure free radical process, polyvinylchloride, polybutene-1, isotactic polybutene, ABS resins, block copolymer, styrenic block copolymers, polyamides, polycarbonates, PET resins, crosslinked polyethylene, copolymers of ethylene and vinyl alcohol (EVOH), polymers of aromatic monomers such as polystyrene, poly-1 esters, polyacetal, polyvinylidine fluoride, polyethylene glycols and/or polyisobutylene.

Tackifiers may be blended with the polyethylene base resins of this invention. Examples of useful tackifiers include, but are not limited to, aliphatic hydrocarbon resins, aromatic modified aliphatic hydrocarbon resins, hydrogenated polycyclopentadiene resins, polycyclopentadiene resins, gum rosins, gum rosin esters, wood rosins, wood rosin esters, tall oil rosins, tall oil rosin esters, polyterpenes, aromatic modified polyterpenes, terpene phenolics, aromatic modified hydrogenated polycyclopentadiene resins, hydrogenated aliphatic resin, hydrogenated aliphatic aromatic resins, hydrogenated terpenes and modified terpenes, and hydrogenated rosin esters. In some embodiments the tackifier is hydrogenated. In other embodiments the tackifier is non-polar. "Non-polar" means that the tackifier is substantially free of monomers having polar groups. Preferably the polar groups are not present, however if they are preferably they are not present at more that 5 weight %, preferably not more that 2 weight %, even more preferably no more than 0.5 weight %, based upon the weight of the tackifier.) In some embodiments the tackifier has a softening point (Ring and Ball, as measured by ASTM E-28) of 80°C to 140°C, preferably 100°C to 130°C. The tackifier, if present, is typically present at about 1 weight % to about 50 weight %, based upon the weight of the blend, more preferably 10 weight % to 40 weight %, even more preferably 20 weight % to 40 weight %. Preferably however, tackifier is not present, or if present, is present at less than 10 weight %, preferably less than 5 weight %, more preferably at less than 1 weight %.

In another embodiment the crosslinked polyethylenes of this invention, and/or the modifier-base resin blends, further comprise typical additives known in the art such as fillers, cavitating agents, antioxidants, surfactants, adjuvants, block, antiblock, color masterbatches, pigments, dyes, processing aids, UV stabilizers, neutralizers, lubricants, waxes, and/or nucleating agents. The additives may be present in the typically effective amounts well known in the art, such as 0.001 weight % to 10 weight %, based upon the weight of the composition. Preferred antioxidants include phenolic antioxidants, such as Irganox 1010, Irganox, 1076 both available from Ciba-Geigy. Preferred fillers, cavitating agents and/or nucleating agents include titanium dioxide, calcium carbonate, barium sulfate, silica, silicon dioxide, carbon black, sand, glass beads, mineral aggregates, talc, clay and the like.

In a barrier pipe embodiment of the invention, the crosslinked polyethylenes of this invention are used in conjunction with at least one barrier layer that is used to reduce the rate that oxygen can permeate through the pipe wall. The barrier layer can be a thin layer of a barrier resin applied as a layer on an inside or outside surface of the crosslinked polyethylene tube, or sandwiched as an internal layer between inner and outer crosslinked polyethylene layers, with or without an adhesive tie layer between the opposing surfaces of the crosslinked polyethylene and the barrier resin. Representative non-limiting examples of barrier materials include ethylene vinyl alcohol (EVOH) copolymers and polyamides (Nylon), or in some instances a blend of the two materials. Suitable barrier resins are available commercially under the trade designations SELAR PA (Dupont), SOARNOL EVOH (Soarus L.L.C) and EVAL EVOH (Eval Co.).

A tie layer facilitate bonding together the dissimilar resins in the multilayer construction of the barrier pipes of the invetnion. The tie layer in one embodiment can be an adhesive resin, e.g. a polyolefin modified with functional groups designed to bond to a variety of resins, such as Nylon and/or EVOH, as well as the crosslinked polyethylene. Suitable adhesive resins are available commercially under the trade designations ADMER (Mitsui Chemical), BYNEL (Dupont) and PLEXAR (MSI Technology).

The crosslinked tubes in an embodiment can be coextrusion coated with an intermediate adhesive tie layer and and an outer oxygen barrier layer. The tie layer can have any suitable thickness for desired adhesion, for example from 0.01 to 0.05 mm (0.5 - 2.0 mils), and the barrier layer can have any thickness suitable for inhibiting oxygen permeability, for example from 0.02 - 0.1 mm (0.8 - 4 mils). Further, the barrier layer should not be so thick as to adversely affect the flexibility or other desirable properties of the crosslinked polyethylene tube.

A similar multilayer barrier tube construction is available in another embodiment, where the moisture curable polyethylene resin is coextruded, e.g. in a single step, with the barrier and tie layers sandwiched between layers of the polyethylene resin, and where the polyethylene resin is crosslinked following the coextrusion step. The multilayer barrier pipes have excellent flexibility and processability from the presence of the NFP, but surprisingly, in contrast to some other flexibilizing materials where the modifier must be crosslinked or bonded to the resin to prevent blooming to the surface and poor adhesion, there is no significant loss of adhesion to the tie layer when the essentially inert modifier of the present invention is employed. Moreover, the barrier pipes of the present invention have the desired oxygen barrier properties.

In a preferred embodiment, the crosslinked blends of this invention (particularly those useful in pipe and tubing applications) have a stress at yield of least 10 MPa or more, preferably 15MPa or more, preferably 20MPa or more.

In a preferred embodiment, the crosslinked blends of this invention (particularly those useful in pipe and tubing applications) have an average bend test of less than 0.5MPa, preferably less than 0.3 MPa, preferably less than 0.1 MPa.

In a preferred embodiment, the crosslinked blends of this invention (particularly those useful in pipe and tubing applications) have a burst pressure at 82°C burst of 2MPa or more, preferably 2.5 MPa or more, preferably 3.0 MPa or more.

In a preferred embodiment, the crosslinked blends of this invention (particularly those useful in pipe and tubing applications) have a melt index (ASTM 1238, 190 °C 2.16 kg) that is at least 25% higher than the exact same crosslinked blend without the NFP, preferably at least 50% higher, preferably at least 100% higher.

In a preferred embodiment, the crosslinked blends of this invention (particularly those useful in wire and cable applications) have a melt index (ASTM 1238, 190 °C, 2.16kg) of 6 dg/min or less, preferably 5 dg/min or less.

In a preferred embodiment, the crosslinked blends of this invention (particularly those useful in wire and cable applications) have a tensile at break of 5 MPa or more, preferably 6MPa or more, preferably 7 MPa or more, preferably 7.5 MPa or more.

In a preferred embodiment, the crosslinked blends of this invention (particularly those useful in wire and cable applications) have an elongation at break of 300% or less, preferably 275 % or less.

In a preferred embodiment, the crosslinked blends of this invention containing filler (preferably at least 20 wt% filler) have a die pressure energy improvement of at least 5%, preferably at least 10 %, preferably at least 15% as compared to the same blend on the same equipment without the NFP. Die Pressure energy improvement is defined to be the die pressure at exit of the NFP containing blend divided by the die pressure at exit of the same blend absent the NFP.

In a preferred embodiment, the crosslinked blends of this invention containing filler (preferably at least 20 wt% filler) have a torque energy improvement of at least 5%, preferably at least 10 %, preferably at least 15% as compared to the same blend on the same equipment without the NFP. Torque energy improvement is defined to be the torque need to extrude the NFP containing blend divided by the torque need to extrude the same blend absent the NFP.

In a preferred embodiment, the crosslinked blends of this invention have a torque energy improvement of at least 20%, preferably at least 40 %, preferably at least 60% as compared to the same blend on the same equipment without the NFP.

In a preferred embodiment, the crosslinked blends of this invention have a die pressure energy improvement of at least 10%, preferably at least 20 %, preferably at least 30% as compared to the same blend on the same equipment without the NFP.

The invention thus relates to various embodiments, which can be enumerated as follows:
1. A method of forming a crosslinked polyethylene article, comprising:
   blending a polyethylene resin with a flexibilizing amount of a non-functionalized plasticizer (NFP) having a viscosity index greater than 120, kinematic viscosity of from 3 to 300 cSt at 100°C, pour point less than -20°C, specific gravity less than 0.86, and flash point greater than 200°C, and wherein the NFP contains less than 5 weight percent of functional groups selected from hydroxide, aryls, substituted aryls, halogens, alkoxys, carboxylates, esters, acrylates, oxygen, nitrogen, and carboxyl, based upon the weight of the NFP, and wherein the number of carbons of the NFP involved in olefinic bonds is less than 5% of the-total number of carbon atoms in the NFP;
   processing the blend into a shape of an article;
   crosslinking the blend to form the crosslinked polyethylene article.
2. The method of embodiment 1 wherein the polyethylene resin comprises an ethylene based polymer comprising at least 50 mole % ethylene units and having less than 20 mole % propylene units.
3. The method of embodiment 2 wherein the polyethylene resin is selected from the group consisting of low density polyethylene, high density polyethylene and combinations thereof.
4. The method of embodiment 1 wherein the blend in the processing step comprises a continuous, homogeneous matrix phase of a mixture of the polyethylene resin and the NFP.
5. The method of embodiment 1 wherein the blend comprises at least 90 weight percent of the polyethylene resin by weight of polymer components of the blend.
6. The method of embodiment 1 wherein the NFP comprises from about 0.5 to about 10 weight percent by weight of the polyethylene resin.
7. The method of embodiment 1 wherein the NFP is selected from poly-alpha-olefins (PAOs), Group III basestocks, high purity hydrocarbon fluids derived from a gas-to-liquids process (GTLs) and combinations thereof.
8. The method of embodiment I wherein the NFP comprises oligomers af C5 to C14 olefins.
9. The method of embodiment 1 wherein the NFP comprises a Group III basestock and has a kinematic viscosity at 100°C of 4 to 50 cSt, a number average molecular weight (Mn) of 400 to 1,000 g/mole, or a combination thereof.
10. The method of embodiment 1 wherein the NFP comprises a paraffinic composition derived from Fischer-Tropsch hydrocarbons and/or waxes, including wax isomerate lubricant oil basestocks and gas-to-liquids basestocks, having a kinematic viscosity at 100°C of about 3 cSt to about 300 cSt.
11. The method of embodiment 1 wherein the blending comprises blending in a melt stream.
12. The method of embodiment 11 wherein the NFP is added to the polyethylene outside a melt stream.
13. The method of embodiment 11 wherein the NFP is added to the polyethylene into the melt stream.
14. The method of embodiment 11 wherein the melt blending comprises compounding in a single screw extruder.
15. The method of embodiment 1 wherein the blending comprises introducing a cure system to the blend.
16. The method of embodiment 15 wherein the cure system comprises an organic peroxide introduced into the blend at a temperature below a decomposition point of the peroxide, and the crosslinking comprises heating the blend to a temperature above the decomposition point of the peroxide.
17. The method of embodiment 16 wherein the crosslinking comprises a continuous vulcanization process downstream from an extruder.
18. The method of embodiment 16 wherein the crosslinking comprises an Engel process wherein after the peroxide is introduced the blend is rammed through a head maintained above the decomposition temperature of the peroxide to form a crosslinked extrudate.
19. The method of embodiment 15 wherein the cure system comprises a moisture-curable silane compound and the blend is cured by exposing the shaped article to moisture.
20. The method of embodiment 19 wherein the moisture exposure comprises contacting the shaped article with water at a temperature of 15°C or less.
21. The method of embodiment 19 wherein the silane compound is introduced as a copolymerized comonomer in a reactor copolymer in the polyethylene resin.
22. The method of embodiment 21 wherein the blending comprises introducing a masterbatch comprising moisture-curing catalyst into the blend.
23. The method of embodiment 19 wherein the silane compound is grafted onto the polyethylene resin by reactive extrusion and the graft resin is mixed with a masterbatch comprising moisture-curing catalyst.
24. The method of embodiment 19 comprising a one step process wherein the silane compound and a crosslinking catalyst are introduced into the blend in a single extruder.
25. The method of embodiment 19 comprising a two-step process wherein the silane compound and a crosslinking catalyst are serially introduced into the blend in separate extrusions.
26. The method of embodiment 1 wherein the crosslinking comprises electron beam irradiation of the shaped article.
27. A crosslinked polyethylene article produced by the method of embodiment 1.
28. The crosslinked polyethylene article of embodiment 27 comprising a tubular.
29. The crosslinked polyethylene article of embodiment 27 wherein the crosslinked polyethylene article is selected from the group consisting of pipes, conduits, tubes, wire jacketing and insulation, and cable jacketing and insulation.
30. The crosslinked polyethylene article of embodiment 29 comprising an extrudate.
31. A composition consisting essentially of crosslinked polyethylene (PEX) blended with from about 0.1 to about 10 percent by weight of the layer of a non-functionalized plasticizer (NFP) having a viscosity index greater than 120, kinematic viscosity of from 3 to 300 cSt at 100°C, pour point less than -20°C, specific gravity less than 0.86, flash point greater than 200°C, and wherein the NFP contains less than 5 weight percent of functional groups selected from hydroxide, aryls, substituted aryls, halogens, alkoxys, carboxylates, esters, acrylates, oxygen, nitrogen, and carboxyl, based upon the weight of the NFP, and wherein the number of carbons of the NFP involved in olefinic bonds is less than 5% of the total number of carbon atoms in the NFP.
32. A pipe comprising at least one layer comprising the composition of embodiment 31.
33. The pipe of embodiment 32 comprising a plurality of layers wherein the PEX composition comprises one layer.
34. Tubing comprising at least one layer comprising the composition of embodiment 31.
35. Insulation or jacketing for wire or cable comprising at least one layer comprising the composition of embodiment 31.
36. A tubular present in a structure selected from the group consisting of hot and cold water plumbing systems, drinking water systems, hydronic radiant heating systems, snow melting equipment, ice rink plumbing and wiring and refrigeration warehouse plumbing and wiring, wherein the tubular comprises at least one layer comprising the composition of embodiment 31.
37. A tubular comprising at least one layer comprising the composition of embodiment 31 and having a flexibility at least 5 percent greater than a similar tubular comprising the corresponding non-flexibilized composition without the NFP.
38. The composition of embodiment 31 wherein the NFP comprises oligomers of C5 to C14 olefins.
39. The composition of embodiment 31 wherein the NFP comprises a Group III basestock and has a kinematic viscosity at 100°C of 4 to 50 cSt, a number average molecular weight (Mn) of 400 to 1,000 g/mole, or a combination thereof.
40. The composition of embodiment 31 wherein the NFP comprises a paraffinic composition derived from Fischer-Tropsch hydrocarbons and/or waxes, including wax isomerate lubricant oil basestocks and gas-to-liquids basestocks, having a kinematic viscosity at 100°C of about 3 cSt to about 300 cSt.
41. The composition of embodiment 31 wherein the crosslinked polyethylene is obtained by crosslinking a blend of the NFP in a polyethylene resin comprising an ethylene based polymer comprising at least 50 mole % ethylene units and having less than 20 mole % propylene units.
42. The composition of embodiment 41 wherein the polyethylene resin is selected from the group consisting of low density polyethylene, high density polyethylene and combinations thereof.
43. The composition of embodiment 41 wherein the blend comprises a continuous, homogeneous matrix phase of a mixture of the polyethylene resin and the NFP.
44. The composition of embodiment 41 wherein the blend comprises at least 90 weight percent of the polyethylene resin by weight of polymer components of the blend.
45. The composition of embodiment 41 wherein the blend is crosslinked with an organic peroxide.
46. The composition of embodiment 41 wherein the blend is crosslinked with a silane compound and moisture curing.
47. The composition of embodiment 46 wherein the blend comprises an intimate admixture with a masterbatch comprising moisture-curing catalyst.
48. The composition of embodiment 41 wherein the polyethylene resin comprises a reactor copolymer comprising a copolymerized silane compound.
49. The composition of embodiment 41 wherein the blend comprises a silane compound grafted onto the polyethylene resin by reactive extrusion and a masterbatch comprising moisture-curing catalyst in intimate admixture therewith.
50. The composition of embodiment 41 wherein the blend is crosslinked by electron beam irradiation.

### TEST METHODS

**Hardness:** The hardness tests were measured in accordance with ASTM D 2240-05 (EN ISO 868) or ASTM D 785, *Test Method for Rockwell Harness of Plastics and Electrical Insulating materials,* in event of conflict ASTM D 785 shall control.

**Young's Modulus or E Modulus:** The Young's modulus tests were performed according to either ASTM D 638/T4 or ISO 572-2/1B for Type 1B Dumbells, *Tensile Properties on Type IV and 1B Dumbells at Room Temperature,* in event of conflict ASTM D 638/T4 shall control.

**Melt Flow Rate (MFR):** MFR was determined according to ASTM D 1238, *Standard Test Method for Flow Rates of Thermoplastics by Extrusion Plastometer.* Measurements were taken in accordance with Procedure B using temperatures and weights suggested for polyethylene polymers (190 °C and 2.16 kg).

**Bend Test:** The bend test measures the force required to bend a 1.27 cm (½ inch) tube to 90° around a mandrel with radius 8 times the outside diameter of the tube. The outside tube diameter in this case was 1.59 cm (5/8 inch), and the mandrel radius was 12.7 cm (5 inches). A similar procedure was used for 1.90 cm (3/4-in.) pipe.

**Tensile Stress @ Yield and Ultimate Elongation:** The tensile and elongation tests were performed according to a ASTM D 638, *Test Method for Tensile Properties of Plastic by Use of Microtensile Specimens.* In these examples the procedure was modified for test speed condition C as defined in the ASTM procedure, and some sample specimens were 12.7 mm (0.5 in.) inside diameter, 15.9 mm (0.625 in.) outside diameter tubes rather than microtensile bars.

**Quick Burst Test:** The 82°C (180°F) burst tests were measured according to a modified ASTM D1599, *Test Method for a Short Time Hydraulic Failure Pressure, of Plastic Pipe, Tubing and Fittings.* The standard test method specifies a constant, uniform increase in pressure to a failure or burst in 60-70 seconds, whereas the modified test increased the pressure quickly to the minimum Quick Burst Pressure specified in the standard for the tube, i.e. ASTM F 876 in the case of PEX tubes, and held this pressure for 1 minute, after which the internal pressure was then increased until the sample burst.

**Average % Gels:** The gel tests measure the percent of crosslinked, undissolvable material in a polymer sample. These tests were performed and measured according to ASTM D2765, *Test Method for Determination of Gel Content and Swell Ratio of Crosslinked Methylene Plastics.* In some cases the data are reported on a normalized basis, meaning that the percent gel is by weight of the polymeric components only by accounting for the presence of low molecular weight compounds such as NFPs which are assumed to dissolve in the solvent used in the tests. For example, a crosslinked polyethylene specimen comprising 3 wt% NFP containing 65.8 wt% gel is normalized to 65.8/(1-0.03) = 67.8 wt% gel on a polymer basis.

**Oxidative Induction Time (OIT):** The OIT tests were performed at 210°C according to ASTM D 3895, *Test Method for Oxidative-Induction Time of Polyolefins by Differential Swanning Calorimetry.*

**Limited Oxygen Index (LOI):** The LOI test was performed according to ASTM D 2863 Rev. A, *Standard Test Method for Measuring the Minimum Oxygen Concentration to Support Candle*-*like Combustion of Plastics (Oxygen Index).*

**Hot Knife Test:** The hot knife test is an official test used in the wire and cable industry, and was performed in accordance with BS/EN 60811- 3-1 (1995).

**Thermogravimetric Analysis (TGA):** For the TGA test, polymer samples were analyzed using a thermogravimetric analyzer. The weight loss of samples of constant weight (70-74 mg) and thickness 1.93 mm (76 mils) were tested isothermally at temperatures of 175°C and 200°C under a nitrogen flow rate of 60 mL/minute. Sample mass was monitored as a function of time over a period of eight hours. The percent modifier loss was calculated by subtracting the total weight loss of the polymer-only control from the total weight loss of samples containing the inventive modifiers and dividing by the total modifier content.

**Mean Dissolved Oxygen Difference (MDOD):** The MDOD test was done as an indication of the affect on microorganism growth. Glass was used as a negative control and wax as the positive control. A water solution containing a number of test samples with and without modifier was compared to the controls. Samples that supported microorganism growth had their oxygen depleted over time, which led to a large MDOD. Samples that did not support microorganism growth maintained constant oxygen concentration over time and had low MDOD. The test method used to determine MDOD was British Standard (BS) 6920:2000 - Testing of Non-metallic Materials For Use With Drinking Water, Growth of Aquatic Microorganisms.

**Acronyms** used in the following examples include:
- BP: Boiling Point
- CS: Cure System
- EB: Ethylene Butene Plastomer
- EO: Ethylene Octene Plastomer
- EPM: Ethylene Propylene Rubber
- EPDM: Ethylene Propylene Diene Modified Rubber
- EVA: Ethylene Vinyl Acetate Copolymer
- FR: Flame Retardant
- HD: High Density
- KV: Kinematic Viscosity
- LD: Low Density
- LLD: Linear Low Density
- LOI: Limited Oxygen Index
- MB: Master Batch
- MDOD: Mean Dissolved Oxygen Difference
- OIT: Oxidative Induction Time
- PAO: Polyalphaolefin
- PE: Polyethylene
- PEX: Crosslinked Polyethylene
- R-COPO: Reactor Copolymers
- TGA: Thermogravimetric Analysis
- Tm: Melting Point
- VI: Viscosity Index

### EXAMPLES

Trials using an NFP modifier were performed using commercial crosslinked polyethylene (PEX) equipment modified for injection of the NFP into the mix chamber of an INOEX gravimetric blender. Pipes of nominal 1.27 cm diameter (0.5 in.) and 1.90 cm (3/4-in.) were made for evaluation. The process was allowed to stabilize at steady state before pipe samples were collected. In general, lower drive amp readings were present on the extruder as the NFP loadings were increased. This showed that the viscosity changes translate into reduced energy consumption and/or improved throughput rates at the same amperage loads. In general, the results also showed that the NFP as described herein did not interfere with the crosslinking of the PEX base resins, or with the antioxidant package in the pipe. Burst testing also showed that samples of the NFP-modified PEX passed with burst pressure well above the minimum requirements. In fact, even the samples with 5 wt % loading had burst test results comparable to the reference sample. Hydrostatic pressure testing (HDS) was performed and also showed initial results indicating an estimated HDS rating of 760 psi. The results generally show that the addition of the NFP modifier to PEX base resins improved the flexibility and maintained most of the strength of the pipe samples.

**Description of Raw Materials:** This invention describes a way to improve the properties of crosslinked polyethylene polymers and copolymers through the use of polymer modifiers. The invention is generally applicable to all cured Ziegler-Natta and metallocene PE materials including HDPE, LDPE, LLDPE, and plastomers. A list of inventive and comparative PE materials used in the examples of this invention is provided in Table 1.

**Table 1. List of Polyethylene Materials Used in the Examples**

| PE # | Polyethylene ID | Description | Source |
|---|---|---|---|
| PE1 | HD6706 | HDPE, ∼6.7 g/10 min. Melt Index, 0.952 g/cc density, 132 °C Tₘ | ExxonMobil Chemical Co. |
| PE2 | HD6706 MONOSIL Compound | HD6706 blended with an MB containing a one-step silane cure system and an AO and UV package. | Zurn Pex, Inc. |
| PE3 | SIOPLAS Compound | SIOPLAS two-step silane cure system in a 95/5 blend ratio and used in heating pipe applications | Padanaplast |
| PE4 | | A metallocene PE with 0.4 dg/min MI and 0.920 g/cc density made according to the general procedure in US 7,179,876. | |
| PE5 | Thermo Plastic HFFR Compound 1 | 70 phr HDPE 105-1 (0.5 MI, 0.967 g/cc) + 30 phr LL1001XV (1.0 MI, 0.918 g/cc) + 160 phr Martinal OL 107LE flame retardant + Silquest FR 693 cure agent + AO package | ExxonMobil Chemical Co. |
| PE6 | Thermo Plastic HFFR Compound 2 | 70 phr HDPE 105-1 (0.5 MI, 0.967 g/cc) + 30 phr LL1001XV (1.0 MI, 0.918 g/cc) + 160 phr Martinal OL 107LE flame retardant + Silquest FR 693 cure agent + AO package | ExxonMobil Chemical Co. |
| PE7 | HD6704 | HDPE, ∼4.5 g/10 min. Melt Index, 0.952 g/cc density, 132 °C Tₘ | ExxonMobil Chemical Co. |
| PE8 | HD7800P | HDPE, 0.35 g/10 min. Melt Index, 0.953 g/cc density | ExxonMobil Chemical Co. |
| PE9 | HD7925.30 | HDPE, 2.5 g/10 min. Melt Index, 0.965 g/cc density | ExxonMobil Chemical Co. |

The liquid modifiers used in this invention are specialty polymer modifiers comprising hydrogenated C₈ to C₁₂ PAO's that have been found to be especially useful in crosslinked PE applications because they are naturally inert and do not affect the cure chemistry as do conventional modifiers like mineral oil, white oil and paraffinic oils. Similarly, the liquid modifiers in an embodiment herein do not affect other chemistries, such as, for example, antioxidant chemistry, filler chemistry, adhesion chemistry or the like, and do not react with other additives in general. As a result, some standard additive concentrations, including antioxidant packages, can be reduced when the NFP modifiers are used in an embodiment and still achieve the same affect. In addition, the inventive modifiers have high permanence, good compatibility with polyethylenes and ethylene copolymers, and narrow molecular weight distribution (Mw/Mn or MWD). As a result, applications using the inventive modifiers have a surprising combination of desired properties including high cure efficiency, improved flexibility and toughness and easy processing. In addition, they display excellent surface properties and exceptional retention of properties over time. A list of inventive and comparative modifiers used in the examples of this invention is provided in Table 2.

**Table 2. Properties of Inventive Modifiers Used in the Examples**

| Mod. # | Type | KV, 100 °C (cSt) | Viscosity Index (VI) | Pour Point (°C) | Tg (°C) | Flash Point (°C) |
|---|---|---|---|---|---|---|
| M1 | Neat | 4 | 125 | -60 | -95 | 226 |
| M2 | Neat | 8 | 139 | -51 | -86 | 255 |
| M3 | Neat | 40 | 151 | -42 | -74 | 286 |
| M4 | MB | Liquid modifier used has 30 wt% M5 in PE masterbatch | | | | |
| M5 | Neat | 10 | 137 | -48 | | 266 |

Although polymer modifiers and fluid modifiers have been used to affect PE materials before, the typical polymer modifiers and even fluid modifiers like mineral oils, white oils, or paraffinic oils often act to reduce the crosslink efficiency in PEX systems, either causing a loss of polymer properties or requiring higher amounts of crosslinking agents to maintain the desired properties. Additionally, they are often inefficient at delivering desired attributes such as flexibility, or do so with significant drawback, e.g., reduced mechanical properties or poor processing. Surprisingly, the NFP modifiers described herein were found to have no detrimental effect on the cure system, or on bonding, grafting or coupling systems. Crosslink systems used to cure PEs include silane systems, peroxide systems and e-beam treated systems to name a few. A list of exemplary cure systems and cure processes used in the examples of this invention is provided in Table 3. Peroxide is another exemplary cure system.

**Table 3. List of Cure Systems and Cure Processes used in the Examples**

| Cure # | Cure Package ID | Description | Chemistry |
|---|---|---|---|
| CS1 | MONOSIL | A single step process wherein the silane is added directly with the other additives and base polymer. | Single step silane process |
| CS2 | SIOPLAS | A two step process for crosslinking PE with silane. The silane is added first and catalyst and activator are added in a second step. | Two-step silane process |
| CS3 | SILFIN 63 | A three component MONOSIL process made up of a silane, peroxide and catalyst. | Single step silane process |
| CS4 | SILQUEST FR 693 | A process for grafting between polymer and filler used in flame retardant compounds with high filler content. | Binds through radical silane chemistry and through functional groups. |
| CS5 | EB | Surface radiation. No additives or enhancers used | Electron Beam Radiation |

### Sample Preparation Methods

**Piping and Tubing Examples:** Some of the examples provided in the present invention involved with piping and tubing production utilize crosslinked polyethylene (PEX) with silane cure systems. The inventive modifiers can be added to extrusion processes in a number of ways without affecting the results. In one embodiment the fluid modifiers can be added directly to the process during extrusion using, for example, pumps. To minimize process affects and enable processing of fluid modified PE without major modification to exiting commercial tube and piping processes, the NFP fluid modifiers were added to the base resin outside the melt stream in a single screw extruder. Alternatively, the inventive fluid modifiers were injected into the mix chamber of an Inoex gravimetric blender before feeding to the process extruders.

**Wire and Cable Examples:** Some of the examples provided in the present invention developed for wire and cable production that would utilize a curing system that must not activate during the initial construction of the cable. As a result, initial cable extrusion would be done at low temperatures, below the activation point of the cure system, before later curing at high temperatures, e.g. in a continuous vulcanization line. The low temperature extrusion would require additional energy due to the high polymer viscosity at these low temperatures.

In another embodiment silane cure systems are used to crosslink the PE. The inventive modifiers have been found to enhance PE properties in a number of different silane systems including a one-step MONOSIL processes and in two-step SIOPLAS processes. Some samples were made on a small HAAKE lab extruder, formed into strips and then moisture cured. Testing was performed on the strips.

In addition, some of the wire and cable examples in the present invention are flame retardant. Often flame retardant formulations have high levels of additives or fillers that would cause additional difficulty in processing. For these reasons flame retardant, cured wire and cable formulations are very difficult to process and depend heavily on process enhancing modifiers.

**Examples 1-4, High Cure Efficiency in Piping and Tubing Applications:** Examples 1-4 in Table 4 show the inventive modifiers were not detrimental to crosslinked PE cure systems. Data for two different silane cure systems were obtained. The test used to measure crosslink density is an extraction test where a weighed sample of the crosslinked PE is put into a sock of a Soxhlet Extractor and the amorphous phase is extracted with boiling dodecanaphthalene (BP = 190°C) for 6 hours. The un-dissolved portion is dried and weighed. The weight is reported as a percent of the original sample weight. The actual percent measured is reported along with the normalized percent calculated after compensating for the 3% modifier added to the inventive examples (percent X 1.03 = normalized percent). The reported values are within about +/- 2% of the control values suggesting that no significant loss of cure efficiency is caused by the inventive modifiers.

**Table 4. Cure Efficiency in Crosslinked Polyethylenes (PEX)**

| | Comparative Example C1 | Example 1 | Comparative Example C2 | Example 2 | Example 3 | Example 4 |
|---|---|---|---|---|---|---|
| Polymer | PE2 | PE2 | PE3 | PE3 | PE3 | PE3 |
| Modifier | | 3.0 % M2 | | 3.0 % M2 | 3.0% M1 | 3.0% M3 |
| Cure System | CS1 | CS1 | CS2 | CS2 | CS2 | CS2 |
| Avg. % Gels | 69.6 | 65.8 | 70.4 | 67.2 | 68.2 | 69.7 |
| Norm. % Gel | | 67.8 | | 69.2 | 70.2 | 71.8 |
| Cure Eff. (%) | | -2.58 | | -1.70 | -0.28 | +1.99 |

**Examples 1-4, Tensile Properties in Piping and Tubing Applications:** In examples 1-4 the PEX material was a hard, high-density plastic used in piping applications. Modifiers are often used to improve the flexibility of piping but when conventional, high Mw polymer modifiers such as plastomers are used to improve the flexibility, it is generally found that all the tensile properties are reduced significantly resulting in a weaker pipe. When typical fluid modifiers are used to modify PEX, it is generally found that the cure efficiency is reduced, and as a result the strength and toughness are reduced as well.

Surprisingly, it has been found that PEX with the inventive modifiers display significant reduction in flexural modulus (improvement in flexibility) but a much lesser reduction in tensile strength and burst strength (a measure of toughness). This allows one to construct high strength, durable pipe with excellent flexibility. In addition, the desired properties obtained can be maintained over time due to the excellent compatibility with the host polymer, the higher Mw (compared to typical fluid modifiers) and the narrow molecular weight distribution of the inventive modifiers. In combination, these properties of the inventive modifiers provide high permanence in the host polymer and retain properties over time.

Table 5 displays the tensile properties of Examples 1-4. The pipe bend test used a 1.27 cm pipe and measured the force required to bend it 90°. A lower force signified a more flexible pipe. The stress at yield was a measure of the strength at the deformation point and the Quick Burst test measured the internal pressure required to burst a pipe at a given temperature. For example, M2 in PE2 cured using CS1 (Example 1) showed a 36% improvement in flexibility, but only a 10% loss in burst strength at 180°C and remained within the required specification for this application.

**Table 5. Tensile Properties in Crosslinked Polyethylenes (PEX)**

| | Comparative Example C1 | Example 1 | Comparative Example C2 | Example 2 | Example 3 | Example 4 |
|---|---|---|---|---|---|---|
| Polymer | PE2 | PE2 | PE3 | PE3 | PE3 | PE3 |
| Modifier | | M2 | | M2 | M1 | M3 |
| Cure System | CS1 | CS1 | CS2 | CS2 | CS2 | CS2 |
| Avg. Bend Test, MPa (% change) | 0.473 | 0.305 (-36%) | 0.466 | 0.369 (-21%) | 0.354 (-24%) | 0.412 (-12%) |
| Stress @ Yield, MPa (%change) | 22.15 | 17.13 (-23%) | 21.06 | 17.06 (-19%) | 18.15 (-14%) | 19.15 (-9%) |
| Strain@ Break, MPa (% | 230 | change) 214 (-7%) | 260 | 244 (-6%) | 267 (+3%) | 193 (-26%) |
| Quick Burst @ 82°C, MPa (% change) | 308 | 2.76 (-10%) | 3.36 | 2.76 (-18%) | 2.88 (-15%) | 2.76 (-18%) |

In addition, this unusual effect is not limited to just one PE or one cure system, but is applicable to many polyethylenes and a variety of other cure systems. Examples 2-4 in Table 5 show a similar improvements obtained in flexibility with lesser reductions in the other tensile properties for different PE's and different silane cure processes using a variety of inventive modifiers. This general applicability would allow compounders and manufacturers to use a convenient array of raw materials and permit the flexibility to fine tune the properties of their products.

**Examples 5-8:** Table 6 suggests that this effect is also applicable to systems crosslinked using e-beam. Example 5 showed a 31% increase in flexibility and only a 20% loss in strength as reflected in both the stress at yield and the burst test.

Table 6 also shows how this effect is applicable to other host polyethylenes with a variety of properties that include a very high Mw PE (Example 7) and a very high density PE (Example 8). The high Mw (low MI) example showed a modest improvement in flexibility despite the slightly higher density with the addition of the inventive modifier while the burst strength remains almost unaffected. The very high density sample displayed very little change in bend strength (flexibility) and stress at yield, but showed modest improvement in high temperature burst strength and significant improvement in room temperature burst strength. With this knowledge the skilled artisan can design a compound with the desired tensile properties through the judicious choice of PE host polymer and then fine tune the flexibility, toughness or strength through the right choice of inventive modifier.

**Table 6. Tensile Properties In Crosslinked Polyethylenes (PEX) 2**

| | Comparative Example C1 | Example 5 | Example 6 | Example 7 | Example 8 |
|---|---|---|---|---|---|
| Polymer | PE2 | PE1 | PE7 | PE8 | PE9 |
| Modifier | | M2 | M2 | M2 | M2 |
| Cure System | CS1 | CS5 | CS1 | CS1 | CS1 |
| Density (g/cc) | 0.952 | 0.952 | 0.952 | 0.953 | 0.965 |
| MI (dg/min.) | 6.7 | 6.7 | 4.5 | 0.35 | 2.5 |
| Avg. Bend Test, MPa (% change) | 0.473 | 0.328 (-31%) | 0.341 (-28%) | 0.423 (-10.6%) | 0.490 (3.5%) |
| Stress @ Yield, MPa (% change) | 22.15 | 17.64 (-20%) | 18.95 (-14.4%) | 19.74 (-10.9%) | 22.18 (0.1%) |
| Quick Burst @ 82°C, MPa (% change) | 3.08 | 2.53 (-18%) | 2.76 (-10%) | 2.43 (-4.7%) | 3.22 (4.5%) |
| Quick Burst @ 21°C, MPa (% change) | 7.12 | 5.84 (-18%) | 7.08 (-0.5%) | 7.40 (3.7%) | 3.32 (14.4%) |

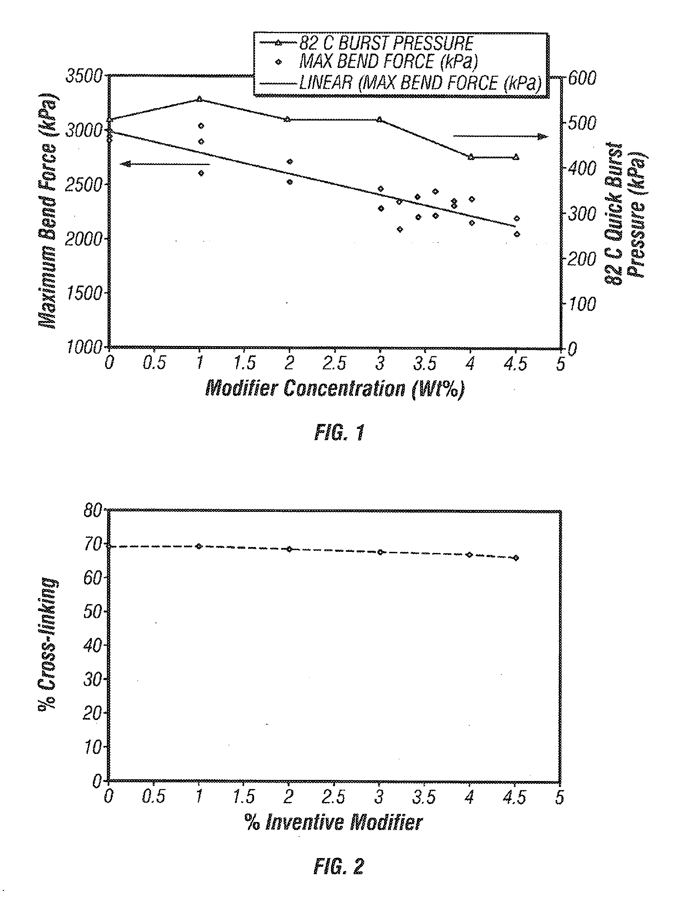

Even more remarkable is that to some extent the amount of flexibility could be controlled by increasing or reducing the amount of modifier used in the compound, but the other tensile properties such as burst strength at 82°C (180°F) remain relatively constant with increasing modifier content. Figure 1 makes the point using a typical PEX pipe formulation like that of Examples 2-4. Adding between 0 and 4.5 wt% inventive modifier improved flexibility by reducing the bend force from 0.483 MPa (70 psi) to 0.276 MPa (40 psi), while the burst pressure remained constant at around 2.76 MPa (400 psi). Figure 2 shows the gel content, which is a measure of the crosslink efficiency. It too remained flat over the composition range indicating the modifier did not interfere with the cure chemistry even at higher concentrations.

**Examples 9-10:** In addition to the inventive modifier showing a lack of interference with a number of PEX cure systems and its surprising enhancement of flexibility without significant loss of tensile or toughness properties, the modifiers act to improve the ease of processing PEX even under very difficult to process conditions. Table 7 provides some data for process improvements in piping and tubing applications. It shows the magnitude of the process improvements associated with using between 3 and 4 wt% inventive modifier in typical piping and tubing formulation. Example 1 with 3.0 wt% M2 showed 5.5% lower load and a 34% lower die pressure at constant screw speed. Examples 9 and 10 were similar to Example 2 with slightly higher modifier load. These examples used a different PE and cure system at two different screw speeds and each showed better process performance. Example 10 had 26% lower load and a 8% lower die pressure using 4.0% M2 at 26 rpm.

**Table 7. Process Improvements in PEX Applications - Piping and Tubing.**

| | Comp. Example C1 | Example 1 | Comp. Example C2 | Example 9 | Comp. Example C2 | Example 10 |
|---|---|---|---|---|---|---|
| Polymer | PE2 | PE2 | PE3 | PE3 | PE3 | PE3 |
| Modifier | | 3.0% M2 | | 3.4% M2 | | 4.0 % M2 |
| Cure System | CS1 | CS1 | CS2 | CS2 | CS2 | CS2 |
| Screw Speed, rpm | 36 | 36 | 31 | 31 | 26 | 26 |
| Load, % (% change) | 36 | 34 (-5.5%) | 40 | 28 (-30%) | 34 | 25 (-26%) |
| Die Pressure, MPa, (% change) | 12.78 | 8.41 (-34%) | 8.51 | 8.05 (-5.4%) | 8.99 | 7.82 (-8.1%) |

**Examples 11-12:** The process improvements seen in the piping and tubing application above were also seen in other processes. Examples 11-12 in Table 8 show process data for a silane crosslinked PEX in a wire and cable formulation. At equivalent melt temperatures a PE with 2.9% of the inventive modifier had an extruder torque 44% les than that of the base PE alone, and the extruder torque dropped 68% in a similar crosslinked silane formulation. In addition the surface appearance improved from very rough shark skin-like appearance to a smooth appearance.

**Table 8. Process Data for PEX in a Wire & Cable Application**

| Temperature Profile: 100°C/160°C/220°C/200°C Tm = 209°C | | | |
|---|---|---|---|
| | Comparative Example 3 | Example 11 | Example 12 |
| Polymer | PE4 | PE4 | PE4 |
| Modifier | - | M4 9.7% | M4 9.7% |
| Cure System | - | - | CS3 |
| Extruder Torque (Nm) | 80 | 45 | 26 |
| Energy Reduction (%) | | -44% | -68% |
| Surface Appearance | Rough | Improved | Improved |

**Examples 13-14:** Very similar improvements were achieved in Examples 13 and 14 made at slightly higher extruder temperatures as shown in Table 9. Comparing Tables 8 and 9, it is seen that the greatest improvement in processing ease is obtained under most demanding conditions. So, the colder, more viscous processes and the ones with the highest filler loads, seem to enjoy the most benefit from employment of the inventive fluid modifiers.

**Table 9. Process Data for PEX in a Wire & Cable Application**

| Temperature Profile: 160°C/200°C/200°C/185°C Tm = 192°C | | | |
|---|---|---|---|
| | Comparative Example 4 | Example 13 | Example 14 |
| Polymer | PE4 | PE4 | PE4 |
| Modifier | | M1 | M4 9.7% |
| Cure System | CS3 | CS3 | CS3 |
| Extruder Torque (Nm) | 59 | 31 | 33 |
| Energy Reduction (%) | | -47% | -44% |
| Surface Appearance | Rough, Fig. 2A | Improved, Fig. 2B | Improved, Figs. 2C and 2D |

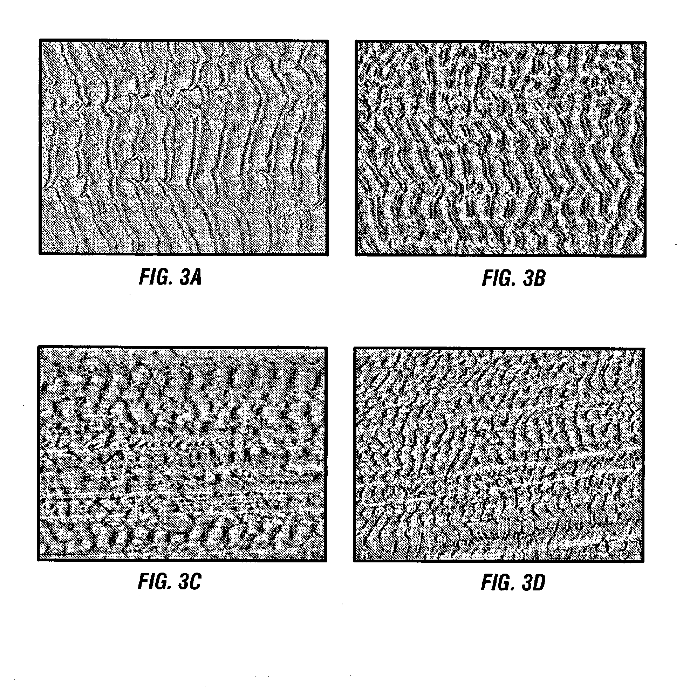

Figures 3A - 3D show the improvement in surface properties when using the inventive modifiers. Figure 3A shows significant shark skin on the neat PE4 (Comparative Example 4) that was improved remarkably in Figure 3B when 10% masterbatch was added (Example 14). 10% MB provided an overall concentration of 2.9 wt% fluid modifier. Figure 3C shows another step improvement when the system was cured, and Figure 3D shows exceptionally smooth surface when the compound was extruded and cured at slightly higher temperatures using the temperature profile 100°C /160°C/220°C/200°C.

Consistent with the % gels data measured in the extraction test run on tubing and piping XLPE (PEX) compounds, the hot set data measured on wire and cable PEX compounds found a similar lack of interference with the cure chemistry. The hot set test measures creep of PEX at elevated temperatures, i.e., increase of elongation of PEX at elevated temperatures under specific load. The hot set value records the percent permanent deformation at 200°C after a force of 0.2 MPa is applied for 15 minutes. The lower the percentage, the higher the crosslink density or cure efficiency. For example, at constant screw speed of 80 rpm, PE4 cured with CS4 at temperature profile T1 showed a 25% increase of elongation in the Hot Set test, while PE4 with 10% M4 masterbatch (2.9 wt% inventive fluid modifier), cured with CS4 at temperature profile T1 showed a similar value of 30% increase in the same test under the same conditions indicating that the cure efficiencies were very similar and the cure chemistry unaffected by the inventive modifiers.

**Examples 15-17:** One of the materials most demanding on the extruder is found in flame retardant wire and cable compounds. Flame retardant compounds can have more than 60% additive and fillers used to suppress flammability. That much solid additive in a viscous melt is difficult to extrude. In addition, the temperature must remain low so the crosslinking agent is not activated during the initial construction of the cable. For these reasons polymer modifiers that can ease processing without affecting the cure chemistry and without affecting tensile properties are often desired in flame retardant compounds.

Examples 15-17 in Table 10 show how the inventive modifier reduced the energy requirements for processing a Halogen-Free Flame Retardant (HFFR) wire and cable compound. For example, adding 1.87% modifier to an HFFR formulation dropped the extruder torque by around 10% and lowered die pressure around 15%. This was achieved in part by almost doubling the compound MI from 2.8 to around 5.0 dg/min (Comparative Example 5 and Example 15).

**Table 10. Process Data for PEX in a Flame Retardant Wire & Cable Application**

| Temperature Profile: 140°C/150°C/160°C/155°C Tm = 170°C | | | | |
|---|---|---|---|---|
| | Comparative Example 5 | Example 15 | Example 16 | Example 17 |
| Polymer | PE5 | PE5 | PE5 | PE5 |
| Modifier | - | M1 | M5 | M3 |
| Cure System | CS4 | CS4 | CS4 | CS4 |
| Extruder Torque (Nm) | 35 | 31 | 32 | 31 |
| Energy Reduction (%) | - | -11 | -9 | -11 |
| Die Pressure (MPa) | 16.6 | 14.0 | 14.3 | 14.5 |
| Pressure Reduction (%) | - | -16 | -14 | -13 |
| MI (21.6 Kg, 190 °C) dg/min | 2.8 | 5.0 | 5.1 | 4.5 |

Looking at the product properties of Examples 15-17 there was, once again, a profound improvement in flexibility accompanied by slight reductions in tensile, hot knife and LOI. Table 11 summarizes the HFFR wire and cable product data. For example, the Flex modulus improved by up to 28% and the elongation about 5% to 8%, while the tensile strength was reduced only about 6%. There were slight increases in the hot knife test which is an indication of reduced toughness and the LOI dropped about 2 percentage points indicating that the material was slightly more flammable, but these were minor changes and the compound remained within the specifications.

**Table 11. Product Data for PEX in a Flame Retardant Wire & Cable Application**

| Temperature Profile: 140°C/150°C/160°C/155°C Tm = 170°C | | | | |
|---|---|---|---|---|
| | Comparative Example 5 | Example 15 | Example 16 | Example 17 |
| Polymer | PE5 | PE5 | PE5 | PE5 |
| Modifier | - | M1 | M5 | M3 |
| Cure System | CS4 | CS4 | CS4 | CS4 |
| Tensile at Break (psi) | 8.2 | 7.7 | 7.6 | 7.8 |
| Reduced Tensile (%) | | -6.1% | -7.3% | -4.9% |
| Elongation at Break (%) | 235 | 256 | 243 | 245 |
| Increase Elongation (%) | | 8% | 3% | 4% |
| Flex Modulus (MPa) | 36 | 26 | 27 | 31 |
| Improved Flexibility (%) | | **28%** | **25%** | 11% |
| LOI (% O₂) | 35 | 32 | 33 | 33 |
| Hot Knife (4 h, 90 °C, %) | 70 | 74 | 82 | 76 |

**Example 18:** The pipe PEX compounds of Examples 1-10 are formed into barrier pipes. In one example, the crosslinked tubes are coextrusion coated with an intermediate adhesive tie layer such as 0.01 - 0.05 mm (0.5 - 2.0 mils) ADMER (Mitsui Chemical), BYNEL (Dupont), or PLEXAR (MSI Technology) adhesive resin and an outer oxygen barrier layer such as 0.02 - 0.1 mm (0.8 - 4 mils) SELAR PA (Dupont), SOARNOL EVOH (Soarus L.L.C), and EVAL EVOH (Eval Co.) barrier resin. In another example, the barrier tube is coextruded in a single step with the moisture curable compounds of Examples 1-10 in inner and outer layers and the barrier resin sandwiched between intermediate adhesive resin tie layers, followed by moisture curing of the outer layers to PEX. The pipes have excellent flexibility as noted above, there is no significant loss of adhesion to the tie layer as experienced with modifiers other than the NFP described herein that is essentially inert in the crosslinking reactions, and the pipes have oxygen barrier properties conferred by the layer of barrier resin.

**Example 19:** The dramatic reduction in flexural modulus found above in Examples 1-4 using 1.27 cm OD (1/2-in.) pipe is not limited to small diameter pipe. Larger diameter pipe is inherently stiffer and more difficult to flexibilize. However, a similar improvement in flexibility was found when the modifier was used in a formulation for fabricating larger pipe such as 1.9 cm (¾-in.) pipe. The tensile properties for the larger pipe (Example 19) are contrasted in Table 13 with those of 1.27 cm (Comparative Example C1) and 1.9 cm pipe (Comparative Example C3) without the modifier.

**Table 13. Tensile Properties In Crosslinked Polyethylenes (PEX).**

| | Comparative Example C1 | Comparative Example C6 | Example 19 |
|---|---|---|---|
| | (1.27 cm pipe) | (1.90 cm pipe) | (1.90 cm pipe) |
| Polymer | PE2 | PE2 | PE3 |
| Modifier | | | 3.0 % M2 |
| Cure System | CS1 | CS1 | CS2 |
| Density (g/cc)* | 0.944 | 0.944 | 0.944 |
| MI (dg/min.) | 6.7 | 6.7 | na |
| Avg. Bend Test (MPa) | 0.473 | 0.773 | 0.570 -26% |
| Stress @ Yield (MPa) | 22.15 | 20.09 | 17.33 -13.7 |
| Strain @ Break (%) | 230 | 253 | na |

| | | | |
|---|---|---|---|
| * Fully formulated and after crosslinking na, Not Available | | | |

Table 13 shows that the bend force of the 1.90 cm pipe (Example 19) displays a 26 % reduction in flexural modulus when 3% M2 modifier is added compared to a similar crosslinked pipe with similar compound density and no modifier (C6).

**Examples 20-22:** Pipe samples with and without the inventive modifiers were held at constant elevated temperature under a nitrogen purge to measure the sample weight loss over time using TGA. Table 12 summarizes the data at constant temperatures of 175 °C and 200 °C over 8 hours for three different modifiers.

**Table 14. Permanence in Crosslinked Polyethylenes (PEX)**

| | Comparative Example C7 | Example 20 | Example 21 | Example 22 |
|---|---|---|---|---|
| Polymer | PE3 | PE3 | PE3 | PE3 |
| Modifier | | M2 | M1 | M3 |
| Cure System | CS2 | CS2 | CS2 | CS2 |
| 175 °C Total Wt Loss after 8 hours (wt%) | 0.13 | 0.32 | 1.25 | 0.27 |
| 175 °C % Modifier Loss after 8 hours** | | 6.2 | 38.2 | 6.8 |
| 200 °C Total Wt Loss after 8 hours (wt%) | 0.18 | 0.66 | 2.16 | 0.36 |
| 200 °C % Modifier Loss after 8 hours** | | 16.1 | 68.3 | 9.6 |

| | | | | |
|---|---|---|---|---|
| ** Corrected for PEX Control weight loss (No Modifier) | | | | |

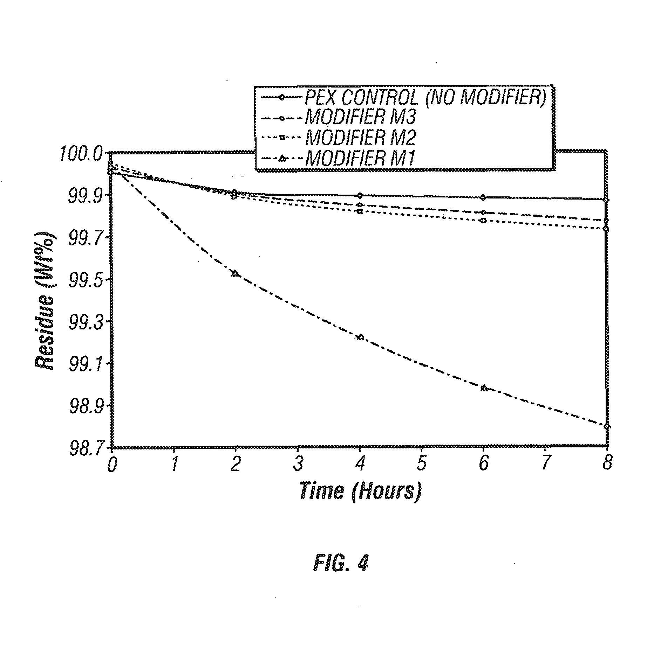

Examples of inventive modifiers with the right combination of compatibility and molecular weight are expected to show very little weight loss over time indicating high permanence, and as a result, better retention of properties. Examples with poor compatibility or insufficient molecular weight would show higher weight loss over time and indicate poor permanence. As mentioned before, the desired composition properties obtained when using the inventive modifiers can be maintained over time due to the excellent compatibility with the host polymer, the higher Mw relative to typical fluid modifiers, and the narrow molecular weight distribution of the inventive modifiers. In combination, these properties of the inventive modifiers provide high permanence in the host polymer and retain properties over time. To exemplify this point, M2 and M3 (Examples 20 and 22) show very low weight loss under these condition and are examples of inventive modifiers that show excellent permanence under these conditions in PEX pipe. M1 (Example 21) has the lowest molecular weight of the samples tested here and it exhibits more weight loss under these conditions. Figure 4 plots the 175°C loss data at intermediate times.

**Example 23:** The MDOD of a water solution containing a number of pipe samples with and without modifier were compared to inert controls like glass and active controls like wax, in a manner consistent with BS 6920:2000. Samples that supported microorganism growth had their oxygen depleted over time, which led to a large MDOD. Samples that did not support microorganism growth maintained constant oxygen concentration over time and had low MDOD. Table 15 displays the results for a number of inventive modifiers in PEX pile sample.

**Table 15. Growth of Aquatic Microorganisms at 30°C**

| Sample | Description | MDOD* Between Weeks 5 and 7 (mg/L) | Comments** |
|---|---|---|---|
| Comparative Example C2 | PE3 and CS2, No Modifier | 0.5 | Pass |
| Example 2 | PE3, CS2 and 3% M2 | 0.3 | Pass |
| Example 3 | PE3, CS2 and 3% M1 | 0.3 | Pass |
| Example 4 | PE3, CS2 and 2% M3 | 0.5 | Pass |
| Example 5 | PE2, CS1 and 3% M2 | 0.5 | Pass |
| Negative Reference | Glass | 0.2 | |
| Positive Reference | Wax | 7.0 | |
| Negative Control (mg/L) | Measured Mean Dissolved Oxygen Content | 7.7 | |

| | | | |
|---|---|---|---|
| * The Mean Dissolved Oxygen Difference (MDOD) is a measure of the ability of the product to support the growth of microorganisms consistent with BS6920:2000. Reported MDOD are the mean value of measurements taken in weeks 5, 6 and 7. ** Pass = Conforms to the requirements of British Standard (BS) 6920- 2000 - Testing of Non-metallic Materials For Use With Drinking Water, Growth of Aquatic Microorganisms (MDOD between the test sample and the Negative Control must be < 2.4 mg/L). | | | |

**Examples 24 - 25:** In another embodiment, the inventive modifiers are found to reduce the recoil effect of coiled and crosslinked tubing and piping. One of the challenges of coiled PEX pipe is that the pipe tends to "remember" or return to the shape it had during curing. When the tubing is cured on small rolls, as is usually desired for commercial sale, the small tube is difficult to unwind and hold straight since it wants to recoil to the small-roll shape. To avoid this problem the tube is often cured on very large rolls, which are then recoiled onto smaller coils after the cure process completes. This double rolling effort adds process steps and cost. The inventive modifiers help alleviate this problem by making the tubing more flexible after the cure, reducing memory tendencies or the recoil effect and helping the tubing to lay flat.

One way to quantify this effect is to measure the bend force after a given time and compare that to the initial maximum bend force recorded during the bend. The force required to keep the pipe bent is recorded over time and the rate at which it is reduced is a measure of how quickly the pipe material is relaxing, or how quickly it loses its memory. The difference in 0 min and 10 min bend force, expressed as a percentage of the original bend force is called the memory loss % and large negative values represent samples that have the most memory loss and are expected to recoil less, lay flatter and be the easiest to handle. Table 16 shows the magnitude of memory loss for two illustrative examples comparing PEX pipe with and without inventive modifiers.

**Table 16. Reduction in Memory Using 10 Minute Bend Force Data**

| **Sample** | **Description** | **Bend Force after 10 Minutes (kPa)** | **% Memory Loss**** |
|---|---|---|---|
| Comparative Example C1 | PE2, CS1, No Modifier | 19.6 | - |
| Example 1 | PE2, CS1 and 3% M2 | 8.6 | -56.1 |
| Comparative Example C2 | PE3, CS2, No Modifier | 12.2 | - |
| Example 2 | PE3, CS2 and 3% M2 | 9.6 | -21.2 |

| | | | |
|---|---|---|---|
| ** Calculated as % Memory Loss = (BF₀ - BF₁₀)/BF₀ where BF₀ is the initial Bend Force and BF₁₀ is the Bend Force after 10 min. | | | |

While the present invention has been described and illustrated by reference to particular embodiments, those of ordinary skill in the art will appreciate that the invention lends itself to many different variations not illustrated herein. For these reasons, then, reference should be made solely to the appended claims for purposes of determining the true scope of the present invention. All priority documents are herein fully incorporated by reference for all jurisdictions in which such incorporation is permitted. Further, all documents cited herein, including testing procedures, are herein fully incorporated by reference to the extent they are not inconsistent with the invention herein for all jurisdictions in which such incorporation is permitted.

## Claims

1. A method of forming a crosslinked polyethylene article, comprising:
blending a polyethylene resin with a flexibilizing amount of a non-functionalized plasticizer (NFP) having a viscosity index as measured following ASTM D2270 greater than 120, kinematic viscosity of from 3 to 300 cSt at 100°C, pour point less than -20°C, specific gravity less than 0.86, and flash point greater than 200°C, and wherein the NFP contains less than 5 weight percent of functional groups selected from hydroxide, aryls, substituted aryls, halogens, alkoxys, carboxylates, esters, acrylates, oxygen, nitrogen, and carboxyl, based upon the weight of the NFP, and wherein the number of carbons of the NFP involved in olefinic bonds is less than 5% of the total number of carbon atoms in the NFP, wherein the term polyethylene means a polymer or copolymer comprising at least 50 mole % ethylene units and having less than 20 mole % propylene units; and
processing the blend into a shape of an article;
crosslinking the blend to form the crosslinked polyethylene article.

2. The method of claim 1 wherein the polyethylene resin is selected from the group consisting of low density polyethylene, high density polyethylene and combinations thereof.

3. The method of claim 1 wherein the NFP is selected from poly-alpha-olefins(PAOs), Group III basestocks, high purity hydrocarbon fluids derived from a gas-to-liquids process (GTLs) and combinations thereof.

4. The method of claim 1 wherein the blending comprises introducing a cure system to the blend.

5. The method of claim 4 wherein the cure system comprises a moisture-curable silane compound and the blend is cured by exposing the shaped article to moisture.

6. The method of claim 5 comprising a two-step process wherein the silane compound and a crosslinking catalyst are serially introduced into the blend in separate extrusions.

7. A crosslinked polyethylene article produced by the method of claim 1, selected from the group consisting of pipes, conduits, tubes, wire jacketing and insulation, and cable jacketing and insulation.

8. A composition consisting essentially of crosslinked polyethylene (PEX) blended with from 0.1 to 10 percent by weight of the composition of a non-functionalized plasticizer (NFP) having a viscosity index as measured following ASTM D2270 greater than 120, kinematic viscosity of from 3 to 300 cSt at 100°C, pour point less than -20°C, specific gravity less than 0.86, flash point greater than 200°C, and wherein the NFP contains less than 5 weight percent of functional groups selected from hydroxide, aryls, substituted aryls, halogens, alkoxys, carboxylates, esters, acrylates, oxygen, nitrogen, and carboxyl, based upon the weight of the NFP, and wherein the number of carbons of the NFP involved in olefinic bonds is less than 5% of the total number of carbon atoms in the NFP; wherein the term consisting essentially of means that components other than the ethylene polymer and NFP modifier are excluded to an extent that a pipe made from the material would not pass the PEX specifications, especially the hydrostatic requirements of ASTM F876, and the term polyethylene means a polymer or copolymer comprising at least 50 mole % ethylene units and having less than 20 mole % propylene units.

9. A pipecomprising at least one layer comprising the composition of claim 8.

10. A tubular present in a structure selected from the group consisting of hot and cold water plumbing systems, drinking water systems, hydronic radiant heating systems, snow melting equipment, ice rink plumbing and wiring and refrigeration warehouse plumbing and wiring, wherein the tubular comprises at least one layer comprising the composition of claim 8.

11. The composition of claim 8 wherein the NFP comprises oligomers of C₅ to C₁₄ olefins.

12. The composition of claim 8 wherein the NFP comprises a paraffinic composition derived from Fischer-Tropsch hydrocarbons and/or waxes, including wax isomerate lubricant oil basestocks and gas-to-liquids basestocks, having a kinematic viscosity at 100°C of 3 cSt to 300 cSt.

13. The composition of claim 8 wherein the crosslinked polyethylene is obtained by crosslinking a blend of the NFP in a polyethylene resin comprising an ethylene based polymer comprising at least 50 mole % ethylene units and having less than 20 mole % propylene units.

14. The composition of claim 13 wherein the blend comprises a continuous, homogeneous matrix phase of a mixture of the polyethylene resin and the NFP.

15. The composition of claim 13 wherein the blend is crosslinked with an organic peroxide or a silane compound and moisture curing.

## Patentansprüche

1. Verfahren zur Bildung eines quervernetzten Polyethylenartikels, bei dem ein Polyethylenharz mit einer flexibilisierenden Menge eines nichtfunktionalisierten Weichmachers (NFP) mit einem mittels ASTM D2270 bestimmten Viskositätsindex von mehr als 120, einer kinematischen Viskosität von 3 bis 300 cSt bei 100°C, einem Stockpunkt von weniger als -20°C, einem spezifischen Gewicht von weniger als 0,86 und einem Flammpunkt von mehr als 200°C gemischt wird, wobei der NFP weniger als 5 Gewichtsprozent funktionelle Gruppen enthält, die aus Hydroxid, Arylen, substituierten Arylen, Halogenen, Alkoxiden, Carboxylaten, Estern, Acrylaten, Sauerstoff, Stickstoff und Carboxyl, bezogen auf das Gewicht des NFP, ausgewählt sind, wobei die Anzahl der an olefinischen Bindungen beteiligten Kohlenstoffatome des NFP weniger als 5% der Gesamtanzahl der Kohlenstoffatome des NFP ausmachen, und wobei der Begriff Polyethylen ein Polymer oder Copolymer mit mindestens 50 mol-% Ethyleneinheiten und weniger als 20 mol-% Propyleneinheiten bedeutet, und
das Gemisch in eine Form eines Artikels verarbeitet wird und das Gemisch quervernetzt wird, um den quervernetzten Artikel zu bilden.

2. Verfahren nach Anspruch 1, bei dem das Polyethylenharz aus der Gruppe bestehend aus Polyethylen mit niedriger Dichte, Polyethylen mit hoher Dichte und Kombinationen davon ausgewählt ist.

3. Verfahren nach Anspruch 1, bei dem das NFP aus Poly-alphaolefinen (PAOs), Gruppe III Grundstöcken, hochreinen Kohlenwasserstofffluiden, die aus einem Gasverflüssigungsverfahren (GTL) abgeleitet sind, und Kombinationen davon ausgewählt ist.

4. Verfahren nach Anspruch 1, bei dem das Mischen ein Einführen eines Vernetzungssystems in das Gemisch beinhaltet.

5. Verfahren nach Anspruch 4, bei dem das Vernetzungssystem eine feuchtigkeitsvernetzbare Silanverbindung umfasst und das Gemisch dadurch vernetzt wird, dass der geformte Artikel Feuchtigkeit ausgesetzt wird.

6. Verfahren nach Anspruch 5, das ein Zwei-Schritt Verfahren umfasst, bei dem die Silanverbindung und ein Quervernetzungskatalysator seriell in separaten Extrusionen in das Gemisch eingeführt werden.

7. Ein quervernetzter Polyethylenartikel hergestellt nach dem Verfahren aus Anspruch 1, der aus der Gruppe bestehend aus Rohren, Leitungen, Schläuchen, Drahtummantelungen und -isolierungen und Kabelummantelungen und -isolierungen ausgewählt ist.

8. Zusammensetzung, die im Wesentlichen aus quervernetztem Polyethylen (PEX) besteht, das mit 0,1 bis 10 Gewichtsprozent einer Zusammensetzung eines unfunktionalisierten Weichmachers (NFPs) mit einem mittels ASTM D2270 bestimmten Viskositätsindex von mehr als 120, einer kinematischen Viskosität von 3 bis 300 cSt bei 100°C, einem Stockpunkt von weniger als -20°C, einem spezifischen Gewicht von weniger als 0,86 und einem Flammpunkt von mehr als 200°C gemischt ist, wobei der NFP weniger als 5 Gewichtsprozent funktionelle Gruppen enthält, die aus Hydroxid, Arylen, substituierten Arylen, Halogenen, Alkoxiden, Carboxylaten, Estern, Acrylaten, Sauerstoff, Stickstoff und Carboxyl, bezogen auf das Gewicht des NFP, ausgewählt sind, wobei die Anzahl der an olefinischen Bindungen beteiligten Kohlenstoffatome des NFP weniger als 5% der Gesamtanzahl der Kohlenstoffatome des NFP ausmacht, wobei die Bezeichnung "im Wesentlichen bestehen aus" bedeutet, dass andere Komponenten als das Ethylenpolymer und der NFP Modifizierer in einem Umfang ausgeschlossen sind, dass ein aus dem Material hergestelltes Rohr die PEX Spezifikationen, besonders die hydrostatischen Anforderungen des ASTM F876, erfüllt und Polyethylen ein Polymer oder Copolymer mit mindestens 50 mol-% Ethyleneinheiten und weniger als 20 mol-% Propyleneinheiten bedeutet.

9. Rohr, das mindestens eine Schicht umfasst, die die Zusammensetzung gemäß Anspruch 8 umfasst.

10. Schlauch, welcher in einer Struktur vorhanden ist, die aus der Gruppe bestehend aus Heiß- und Kaltwasserinstallationssystemen, Trinkwassersystemen, hydronischen Strahlungsheizungssystemen, Schneeschmelzgeräten, Eislaufbahnverrohrung und -verdrahtung und Kühlhausverrohrung und -verdrahtung ausgewählt ist, wobei der Schlauch mindestens eine Schicht umfasst, die die Zusammensetzung gemäß Anspruch 8 umfasst.

11. Zusammensetzung nach Anspruch 8, wobei der NFP Oligomere von C₅ bis C₁₄ Olefinen umfasst.

12. Zusammensetzung nach Anspruch 8, wobei der NFP eine paraffinische Zusammensetzung mit einer kinematischen Viskosität von 3 cSt bis 300 cSt bei 100°C umfasst, die von Fischer-Tropsch Kohlenwasserstoffen und/oder Wachsen, einschließlich, Wachsisomeratschmierölgrundstöcken und Gasverflüssigungsgrundstöcken, abgeleitet ist.

13. Zusammensetzung nach Anspruch 8, wobei das quervernetzte Polyethylen dadurch erhalten wird, dass ein Gemisch des NFP in einem Polyethylenharz, das ein auf Ethylen basierendes Polymer umfasst, welches mindestens 50 mol-% Ethyleneinheiten und weniger als 20 mol-% Propyleneinheiten umfasst, quervernetzt wird.

14. Zusammensetzung nach Anspruch 13, wobei das Gemisch eine regelmäßige, homogene Matrixphase einer Mischung des Polyethylenharzes und des NFP umfasst.

15. Zusammensetzung nach Anspruch 13, wobei das Gemisch mit einem organischen Peroxid oder einer Silanverbindung und Feuchtigkeitsvernetzung quervernetzt wird.

## Revendications

1. Procédé de formation d'un article de polyéthylène réticulé, comprenant :
le mélange d'une résine de polyéthylène avec une quantité flexibilisante d'un plastifiant non fonctionnalisé (PNF) ayant un indice de viscosité, mesuré selon ASTM D2270, qui est supérieur à 120, une viscosité cinématique de 3 cSt à 300 cSt à 100 °C, un point d'écoulement inférieur à -20 °C, un poids spécifique inférieur à 0,86, et un point d'éclair supérieur à 200 °C, et dans lequel le PNF contient moins de 5 % en poids de groupes fonctionnels sélectionnés parmi des groupes hydroxyde, aryle, aryle substitués, halogéno, alcoxy, carboxylate, ester, acrylate, un atome d'oxygène, un atome d'hydrogène, et un groupe carboxyle, relativement au poids du PNF, et dans lequel le nombre d'atomes de carbone du PNF entrant en jeu dans les liaisons oléfiniques représente moins de 5 % du nombre total d'atomes de carbone dans le PNF, le terme « polyéthylène » signifiant un polymère ou un copolymère comprenant au moins 50 %mol d'unités éthylène et comportant moins de 20 %mol d'unités propylène ; et
la transformation du mélange pour produire une forme d'un article ;
la réticulation du mélange pour former l'article de polyéthylène réticulé.

2. Procédé selon la revendication 1, dans lequel la résine de polyéthylène est sélectionnée dans le groupe constitué d'un polyéthylène de basse densité, d'un polyéthylène de haute densité, et de combinaisons de ceux-ci.

3. Procédé selon la revendication 1, dans lequel le PNF est sélectionné parmi des poly-alpha-oléfines (PAO), des huiles de base du Groupe III, des fluides hydrocarbures à niveau de pureté élevé dérivés d'un procédé de liquéfaction de gaz, et des combinaisons de ceux-ci.

4. Procédé selon la revendication 1, dans lequel le mélange comprend l'introduction d'un système de durcissement dans le mélange.

5. Procédé selon la revendication 4, dans lequel le système de durcissement comprend un composé de silane durcissable par apport d'humidité et le mélange est durci par exposition de l'article formé à l'humidité.

6. Procédé selon la revendication 5, comprenant un procédé en deux étapes dans lequel le composé de silane et un catalyseur de réticulation sont introduits en série dans le mélange dans des extrusions séparées.

7. Article de polyéthylène réticulé produit par le procédé selon la revendication 1, sélectionné dans le groupe constitué de tuyaux, de conduites, de tubes, de gaines et d'isolants de fils, et de gaines et d'isolants de câbles.

8. Composition constituée essentiellement de polyéthylène réticulé (PR) mélangé avec 0,1 % à 10 % en poids de la composition constituée d'un plastifiant non fonctionnalisé (PNF) ayant un indice de viscosité, mesuré selon ASTM D2270, qui est supérieur à 120, une viscosité cinématique de 3 cSt à 300 cSt à 100 °C, un point d'écoulement inférieur à -20 °C, un poids spécifique inférieur à 0,86, un point d'éclair supérieur à 200 °C, et dans lequel le PNF contient moins de 5 % en poids de groupes fonctionnels sélectionnés parmi des groupes hydroxyde, aryle, aryle substitués, halogéno, alcoxy, carboxylate, ester, acrylate, un atome d'oxygène, un atome d'hydrogène, et un groupe carboxyle, relativement au poids du PNF, et dans lequel le nombre d'atomes de carbone du PNF entrant en jeu dans les liaisons oléfiniques représente moins de 5 % du nombre total d'atomes de carbone dans le PNF ; le terme « constituée essentiellement de » signifiant que les constituants autres que le polymère d'éthylène et le modificateur PNF sont exclus dans la mesure où un tuyau constitué du matériau ne serait pas conforme aux spécifications concernant le polyéthylène réticulé, en particulier les conditions hydrostatiques énoncées dans ASTM F876, et le terme « polyéthylène » signifiant un polymère ou un copolymère comprenant au moins 50 %mol d'unités éthylène et comportant moins de 20 %mol d'unités propylène.

9. Tuyau comprenant au moins une couche comprenant la composition selon la revendication 8.

10. Élément tubulaire présent dans une structure sélectionnée dans le groupe constitué de réseaux de plomberie pour l'eau chaude et l'eau froide, de réseaux d'eau potable, de systèmes hydroniques de chauffage par rayonnement, d'équipement servant à faire fondre la neige, de réseaux de plomberie et de câblage de patinoires, et de réseaux de plomberie et de câblage d'entrepôts de réfrigération, l'élément tubulaire comprenant au moins une couche comprenant la composition selon la revendication 8.

11. Composition selon la revendication 8, dans laquelle le PNF comprend des oligomères d'oléfines C₅-C₁₄.

12. Composition selon la revendication 8, dans laquelle le PNF comprend une composition paraffinique dérivée d'hydrocarbures et/ou de cires de Fischer-Tropsch, y compris des huiles de base lubrifiantes sous forme d'isomérats de cires et des huiles de base issues de la liquéfaction de gaz, ayant une viscosité cinématique de 3 cSt à 300 cSt à 100 °C.

13. Composition selon la revendication 8, dans laquelle le polyéthylène réticulé est obtenu par réticulation d'un mélange du PNF dans une résine de polyéthylène comprenant un polymère à base d'éthylène comprenant au moins 50 %mol d'unités éthylène et comportant moins de 20 %mol d'unités propylène.

14. Composition selon la revendication 13, dans laquelle le mélange comprend une phase continue, à matrice homogène, d'un mélange de la résine de polyéthylène et du PNF.

15. Composition selon la revendication 13, dans laquelle le mélange est réticulé au moyen d'un peroxyde organique ou d'un composé de silane avec durcissement par apport d'humidité.
